(19)

Europäisches Patentamt
European Patent Office
Office européen des brevets

(11) **EP 2 717 155 A1**

(12) **EUROPEAN PATENT APPLICATION**
published in accordance with Art. 153(4) EPC

(43) Date of publication:
**09.04.2014 Bulletin 2014/15**

(21) Application number: **12788831.1**

(22) Date of filing: **25.05.2012**

(51) Int Cl.:
*G06F 3/14* (2006.01)      *H04N 1/60* (2006.01)
*H04N 9/64* (2006.01)

(86) International application number:
**PCT/CN2012/076097**

(87) International publication number:
**WO 2012/159586 (29.11.2012 Gazette 2012/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2011   CN 201110139386
08.06.2011   CN 201110151415
03.05.2012   CN 201210135814**

(71) Applicant: **TYPONTEQ Co., Ltd
Beijing 100085 (CN)**

(72) Inventor: **JIA, Wei
Beijing 100085 (CN)**

(74) Representative: **Gille Hrabal
Brucknerstrasse 20
40593 Düsseldorf (DE)**

(54) **COLOR DISTORTION CORRECTION METHOD AND DEVICE FOR IMAGING SYSTEMS AND IMAGE OUTPUT SYSTEMS**

(57)      The present invention discloses a color-distortion-correction method and device in an imaging system or an image output system. The method includes: capturing by the imaging system an object to be captured to generate the original image data of the object; based on the priori knowledge of color distortion previously stored in the imaging system, correcting color distortion of the original image data to generate the corrected image data. In embodiments of the present invention, since the priori knowledge of color distortion of the imaging system or the image output system is obtained in advance, that is, the characteristics of the color distortion in the imaging system or the image output system are known in advance, it is capable of correcting color distortion of the image data of captured images based on the priori knowledge of color distortion of the system. Therefore, the color deviation of the color images introduced due to the characteristics of the system itself is eliminated and the goal of "what you see is what you get" is realized.

Figure 1a

EP 2 717 155 A1

**Description**

**FIELD OF THE INVENTION**

The present invention relates to a color image technology, particularly to a technology of correcting color distortion for the color image.

**BACKGROUND OF THE INVENTION**

With the development of computer science and color image input-output technology, color image as information carrier are widely used in the printing, image, advertising, film and television, e-commerce, digital entertainment, and many other fields. People has more higher requirement for the quality of color reproduction. However, color images obtained through the imaging system such as a camera or video camera may have color deviation from colors of the objects being shot by the image system. Further, a color deviation occurs in the images outputted from a projector, a printer, or a monitor. Automatic white balance is usually used to correct the color deviation of images in the prior art. For example, the typical solutions such as white spot method, gray world model, perfect reflection method, edge test method, Retinex method, etc., are used.

However, the inventor of the present invention determined, the prior solutions of color correction are based on maintaining white balance of visual constant as a goal. the technique of gray single color balance or technique based on gray single color balance is used. Therefore, color correction results entirely depend on the field scene. Although the color correction results are certain useful, a large color distortion is still existed. Because the imaging system or image output system is affected by such as the imaging mechanism, color space, the performance of components, material properties, and machining precision, color feature difference is significant. Therefore, the prior color-distortion-correction is only capable of realizing the white balance on the vision, i.e., eliminating the overall color deviation, but fails to eliminate the color deviation introduced due to the characteristics of the device itself. For example, for a particular device, the red color may appear partial purple red color on the display, and the yellow color may appear partial green color on the display due to the liquid crystals, while the whole image background is still maintained the white balance. Therefore, the prior color-distortion-correction method is not capable of realizing an effective correction in case the color deviation is introduced due to the characteristics of the device itself. That is, it cannot achieve the goal of "what you see is what you get", and it fails to truely show the real color of the field scene.

**SUMMARY OF THE INVENTION**

Embodiments of the present invention provide a color-distortion-correction method and device for an imaging system and an image output system, in order to eliminate the color deviation of color image introduced due to the characteristics of the device itself.

In accordance with one aspect of the present invention, a method of correcting color distortion in an imaging system is provided. Said method including: the imaging system shoots the scene to generate the original image data of the scene; correcting the color distortion of the original image data based on the priori knowledge of color distortion previously stored in the imaging system, to generate corrected image data.

Wherein, the priori knowledge of color distortion includes a curve function of HLUT, a curve function of SLUT, and a curve function of ILUT; or, the priori knowledge of color distortion includes a curve table of HLUT, a curve table of SLUT, and a curve table of ILUT; and

the priori knowledge of color distortion is obtained by

obtaining the original color data of color squares by the imaging system shooting respective color squares of a Color-Checker, wherein the original color data of the color squares is in the first format;

decrosstalking the original color data of color squares to generate the decrosstalked color data of respective color squares;

converting the standard color data of color squares into data in the second format to generate the standard color data in the second format of respective color squares, converting the decrosstalked color data of color squares into data in the second format to generate the decrosstalked color data in the second format of respective color squares, wherein, the standard color data of respective color squares are in the first format;

for each color square, determining the correspondence between its standard color data in the second format and its decrosstalked color data in the second format, and generating the priori knowledge of color distortion based on the correspondence.

Further, the step of decrosstalking the original color data of color squares to generate the decrosstalked color data of respective color squares including:

decrosstalking the original color data of color squares according to the following equation set 1, to generate the decrosstalked color data of respective color squares:

$$R_{GD} = K_{rr}R_k + K_{rg}G_k + K_{rb}B_k$$
$$G_{GD} = K_{rg}R_k + K_{gg}G_k + K_{gb}B_k$$
$$B_{GD} = K_{rb}R_k + K_{gb}G_k + K_{bb}B_k \quad \text{(equation set 1)}$$

wherein, $K_{rr}$, $K_{gg}$, $K_{bb}$, $K_{rg}$, $K_{rb}$, $K_{gr}$, $K_{gb}$, $K_{br}$ and $K_{bb}$ are crosstalking parameters, $R_{GD}$, $G_{GD}$ and $B_{GD}$ are the original color data of a color square, $R_k$, $G_k$ and $B_k$ are the decrosstalked color data in the RGB format.

Further, the step of correcting the color distortion of the original image data based on the priori knowledge of color distortion previously stored in the imaging system, including steps:

decrosstalking the original image data to generate the image data decrosstalked, wherein the original image data is the image data in the first format;
converting the image data decrosstalked into data in the second format to generate the decrosstalked image data in the second format;
correcting color distortion of the decrosstalked image data in the second format according to the priori knowledge of color distortion, including: determining image data in the second format corresponding to the decrosstalked image data in the second format based on the priori knowledge of color distortion, and taking the corresponding data in the second format as the corrected image data in the second format;
and converting the corrected second format image data into data in the first format to generate the final corrected image data.

Further, the step of decrosstalking the original color data of color squares to generate the decrosstalked color data of respective color squares including:

decrosstalking the original color data of color squares according to the following equation set 1, to generate the decrosstalked color data of respective color squares:

$$R_{GD} = K_{rr}R_k + K_{rg}G_k + K_{rb}B_k$$
$$G_{GD} = K_{rg}R_k + K_{gg}G_k + K_{gb}B_k$$
$$B_{GD} = K_{rb}R_k + K_{gb}G_k + K_{bb}B_k \quad \text{(equation set 1)}$$

wherein, $K_{rr}$, $K_{gg}$, $K_{bb}$, $K_{rg}$, $K_{rb}$, $K_{gr}$, $K_{gb}$, $K_{br}$, $K_{bb}$ are crosstalking parameters; $R_{GD}$, $G_{GD}$, $B_{GD}$ are the original image data, $R_k$, $G_k$ and $B_k$ are the image data decrosstalked.

Further, the priori knowledge of color distortion is a color data look-up table, and the priori knowledge of color distortion is obtained by:

acquiring the correction curve function or the correction curve table; correcting color distortion of the decrosstalked color data in the second format of color squares of the ColorChecker based on the correction curve function or the correction curve table, to generate corrected color data in the second format of respective color squares; converting the corrected color data in the second format of color squares into color data in the first format to generate the corrected color data in the first format of respective color squares; for each color square, determining the correspondence between its original color data and its corrected color data in the first format, and storing the determined correspondence in the color data look-up table;
wherein, the correction curve function or correction curve table is obtained by: obtaining the original color data of color squares by the imaging system shooting respective color squares in a ColorChecker, wherein the original color data of color squares are in the first format; decrosstalking the original color data of color squares to generate decrosstalked color data of respective color squares; converting the standard color data of color squares into data in the second format to generate standard color data in the second format of respective color squares, and converting the decrosstalked color data of color squares into data in the second format to generate the decrosstalked color data in the second format of respective color square, wherein the standard color data of respective color squares are in the first format; and for each color square, determining the correspondence between its standard color data in the second format and its decrosstalked color data in the second format, and determining, based on the correspondence, the curve functions including a curve function of HLUT, a curve function of SLUT and a curve function of ILUT, or the curve tables including a curve table of HLUT, a curve table of SLUT and a curve table of ILUT.

Further, the step of correcting the color distortion of said original image data based on the priori knowledge of color distortion previously stored in the imaging system, including: searching the data corresponding to the original image data based on the color data look-up table, and taking the searched corresponding data as the corrected image data.

Wherein the first format is the device color space format including but not limited to RGB, CMY color space format, the second format is the color appearance color space format including but not limited to HSI, HSB, HSV, HSL, LCH, and HGICl color space format, the curve function of HLUT is the hue curve function of the color appearance color space, the curve function of SLUT is the saturation curve function of the color appearance color space, and the curve function of ILUT is the intensity curve function of the color appearance color space.

According another aspect of the invention, a method of correcting color distortion in an image output system is provided, including steps: the image output system receives the image data of images to be output; correcting color distortion of the received image data based on priori knowledge of color distortion previously stored in the image output system, to generate the corrected image data, and outputting the corrected image data from the image output system.

Further, the priori knowledge of color distortion includes a curve function of HLUT, a curve function of SLUT and a curve function of ILUT, or the priori knowledge of color distortion includes a curve table of HLUT, a curve table of SLUT and a curve table of ILUT; and

the priori knowledge of color distortion is acquired by steps: collecting image data of color squares of a ColorChecker outputted from the image output system, and determining the output color data of respective color squares based on the collected image data, wherein the output color data of respective color squares are in the first format; converting the standard color data of respective color squares into data in the second format to generate standard color data in the second format of respective color squares, and converting the output color data of respective color squares into data in the second format to generate output color data in the second format of respective color squares; and for each color square, determining the correspondence between its standard color data in the second format and its output color data in the second format, and generating the priori knowledge of color distortion based on the correspondence.

Further, the step of correcting color distortion of the received image data based on priori knowledge of color distortion previously stored in the image output system, including: converting the image data received by the image output system into data in the second format to generate uncorrected image data in the second format; correcting color distortion of uncorrected image data in the second format based on the priori knowledge of color distortion, to generate corrected image data in the second format; converting corrected image data in the second format into data in the first format to generate the final corrected image data.

Further, the priori knowledge of color distortion is a color data look-up table, and the priori knowledge of color distortion is obtained by steps:

obtaining the correction curve function or the correction curve table;
correcting color distortion of output color data in the second format of color squares in a ColorChecker based on the correction curve function or the correction curve table, to generate the corrected color data in the second format of respective color squares;
converting the corrected color data in the second format of color squares into color data in the first format to generate the corrected color data in the first format of respective color squares;
for each color square, determining the correspondence between its standard color data and its corrected color data in the first format, and storing the determined correspondence in a color data look-up table;
wherein, the correction curve function or correction curve table is obtained by steps:

collecting the image data of images of respective color squares outputted from the output system, and determining the output color data of respective color squares according to the collected image data, wherein the output color data of respective color squares are in the first format;
converting the standard color data of color squares into data in the second format to generate standard color data in the second format of respective color squares, and converting the output color data of color squares into data in the second format to generate output color data in the second format of respective color squares, wherein the standard color data of respective color squares are in the first format;
for each color square, determining the correspondence between its standard color data in the second format and its output color data in the second format, and determining, based on the correspondence, the curve functions including a curve function of HLUT, a curve function of SLUT and a curve function of ILUT, or the curve tables including a curve table of HLUT, a curve table of SLUT and a curve table of ILUT.

Further, the step of correcting color distortion of the received image data based on priori knowledge of color distortion previously stored in the image output system, including: taking the image data received by the image output system as the original image data, determining data corresponding to the original image data base on the color data look-up table, and taking the determined corresponding data as the corrected image data.

According to another aspect of the invention, a color-distortion-correction device in an imaging system is provided, including: a storage module of priori knowledge of color distortion, for storing the priori knowledge of color distortion of the imaging system; an original image data acquisition module for shooting the scene to generate original image data in the first format of the scene; and an image data color correction module for, based on the priori knowledge of color distortion stored in the storage module of priori knowledge of color distortion, correcting color distortion of the original image data acquired by the original image data acquisition module to generate the corrected image data, wherein the priori knowledge of color distortion includes a curve function of HLUT, a curve function of SLUT and a curve function of ILUT, or the priori knowledge of color distortion includes a curve table of HLUT, a curve table of SLUT and a curve table of ILUT, or the priori knowledge of color distortion includes a color data look-up table of color data in the first format of respective color squares.

Wherein, the image data color correction module including: a decrosstalking unit for decrosstalking the original image data to generate the image data decrosstalked; a first conversion unit for converting the image data decrosstalked into data in the second format to generate the decrosstalked image data in the second format; a color-distortion-correction unit for correcting color distortion of the decrosstalked image data in the second format according to the priori knowledge of color distortion, including: determining data in the second format corresponding to the decrosstalked image data in the second format according to the priori knowledge of color distortion, and taking the corresponding data in the second format as corrected image data in the second format; and a second conversion unit for converting corrected image data in the second format into data in the first format to generate the final corrected image data.

According to another aspect of the invention, a acquisition device of priori knowledge of color distortion of an imaging system is provided, including: an acquisition module of original color data of color squares, for acquiring original color data in the first format of color squares by the imaging system shooting respective color squares in a ColorChecker; an decrosstalking module decrosstalking the original color data of color squares to generate the decrosstalked color data of respective color squares; a format conversion module for converting the standard color data of color squares into data in the second format to generate standard color data in the second format of respective color squares, and converting the decrosstalked color data of color squares into data in the second format to generate the decrosstalked color data in the second format of respective color squares; and a generation module of priori knowledge of color distortion for determining, for each color square, the correspondence between its standard color data in the second format and its decrosstalked color data in the second format, and generating the priori knowledge of color distortion of the imaging system according to the correspondence.

According to another aspect of the invention, a color-distortion-correction device of an imaging system is provided, including: a storage module of priori knowledge of color distortion, for storing the priori knowledge of color distortion of the imaging system; an original image data acquisition module for shooting the scene to generate original image data in the first format of the scene; and an image data color correction module for correcting, according to priori knowledge of color distortion stored in the storage module of priori knowledge of color distortion, a color distortion of the original image data generated by the original image data acquisition module to generate the corrected image data, wherein the priori knowledge of color distortion is a color data look-up table in which the correspondence between the standard color data of a color square and the output color data of said color square is stored.

According to another aspect of the invention, a acquisition device of priori knowledge of color distortion of in an imaging system is provided, including: an original color data of a color square acquisition module for acquiring original color data in the first format of color squares by the imaging system shooting respective color squares in a ColorChecker; a generation module of priori knowledge of color distortion for obtaining a correction curve function or a correction curve table, correcting color distortion of the decrosstalked color data in the second format of respective color squares based on the correction curve function or correction curve table, to generate the corrected color data in the second format of respective color squares, converting the corrected color data in the second format of color squares into color data in the first format to generate the corrected color data in the first format of respective color squares, determining, for each color square, the correspondence between its original color data and its corrected color data in the first format and storing the determined correspondence in a color data look-up table;

wherein, the correction curve function or the correction curve table are determined by steps: obtaining original color data of color squares by the imaging system shooting respective color squares in a ColorChecker, wherein the original color data of color squares are in the first format; decrosstalking the original color data of color squares to generate decrosstalked color data of respective color squares; converting the standard color data of color squares into data in the second format to generate standard color data in the second format of respective color squares, and converting the decrosstalked color data of color squares into data in the second format to generate the decrosstalked color data in the second format of respective color square, wherein the standard color data of respective color squares are in the first format; for each color square, determining the correspondence between its standard color data in the second format and its decrosstalked color data in the second format, and determining, based on the correspondence, the curve functions including a curve function of HLUT, a curve function of SLUT and a curve function of ILUT, or the curve tables including a curve table of HLUT, a curve table of SLUT and a curve table of ILUT.

According to another aspect of the invention, a color-distortion-correction device of an image output system is provided, including: a storage module of priori knowledge of color distortion, for storing the priori knowledge of color distortion of the image output system; an image data receiving module for receiving image data of images to be output; and an image data color correction module for, based on the priori knowledge of color distortion stored in the storage module of priori knowledge of color distortion, correcting color distortion of the image data received by the image data receiving module, wherein the priori knowledge of color distortion includes a curve function of HLUT, a curve function of SLUT and a curve function of ILUT, or the priori knowledge of color distortion includes a curve table of HLUT, a curve table of SLUT and a curve table of ILUT, or the priori knowledge of color distortion includes a color data look-up table of color data in the first format of respective color squares.

wherein the image data color correction module including: a first conversion unit for converting the image data received by the image output system as original data in the first format into data in the second format to generate uncorrected image data in the second format; a color-distortion-correction unit for a color-distortion-correction unit for correcting color distortion of uncorrected image data in the second format according to the priori knowledge of color distortion, said correcting color distortion including: according to the priori knowledge of color distortion, determining data in the second format corresponding to uncorrected image data in the second format, and taking the corresponding data in the second format as corrected image data in the second format; and a second conversion unit for converting corrected image data in the second format into data in the first format to generate the final corrected image data.

According to another aspect of the invention, a acquisition device of priori knowledge of color distortion of an image output system is provided, including: an acquisition module of output color data for collecting the image data of images of color squares outputted from the output system, and determining the output color data of respective color squares according to the collected image data; a format conversion module for converting the standard color data of color squares into data in the second format to generate standard color data in the second format of respective color squares, and converting the output color data of color squares into data in the second format to generate output color data in the second format of respective color squares, wherein the standard color data of respective color squares are in the first format; and a generation module of priori knowledge of color distortion determining, for each color square, the correspondence between its standard color data in the second format and its output color data in the second format, and generating the priori knowledge of color distortion based on the correspondence of the image output system.

According to another aspect of the invention, a color-distortion-correction device of an image output system is provided, including: a storage module of priori knowledge of color distortion, for storing the priori knowledge of color distortion of the image output system, wherein the priori knowledge of color distortion is a color data look-up table in which the correspondence between the standard color data of a color square and the corrected color data in the first format of this color square is stored; an image data receiving module for receiving the image data of images to be output; and an image data color correction module for correcting color distortion of the image data received by the image data receiving module according to the priori knowledge of color distortion stored in the storage module of priori knowledge of color distortion.

According to the invention, a acquisition device of priori knowledge of color distortion of an image output system, including: an acquisition module of output color data for collecting image data of images of respective color squares output by the image output system, determining the output color data of respective color squares based on the collected image data; a generation module of priori knowledge of color distortion for obtaining a correction curve function or a correction curve table, correcting, based on the correction curve function or correction curve table, a color distortion of output color data in the second format of color squares, to generate the corrected color data in the second format of respective color squares, converting the corrected color data in the second format of color squares into color data in the first format to generate the corrected color data in the first format of respective color squares, determining, for each color square, the correspondence between its standard color data and its corrected color data in the first format and storing the determined correspondence in a color data look-up table;

wherein, the correction curve function or the correction curve table is determined by steps:

collecting image data of images of color squares output by the image output system, and determining the output color data of respective color squares based on the collected image data;
converting the standard color data of color squares into data in the second format to generate standard color data in the second format of respective color squares, and converting the output color data of color squares into the second color data to generate output color data in the second format of respective color squares;

for each color square, determining the correspondence between its standard color data in the second format and its output color data in the second format, and determining, based on the correspondence, the curve functions including a curve function of HLUT, a curve function of SLUT and a curve function of ILUT, or the curve tables including a curve table of ILUT, a curve table of SLUT and a curve table of ILUT.

Embodiments of the present invention obtain the priori knowledge of color distortion of the imaging system and/or the image output system in advance, that is to know in advance the characteristics of the color distortion of the imaging system and/or the image output system, correcting color distortion of the shooted image data in the color appearance color space in accordance with the priori knowledge of color distortion of the system, so as to eliminate the color deviation of the color image introduced due to the characteristics of the system itself and thus achieve the goal of "what you see, what you get".

## BRIEF DESCRIPTION OF THE DRAWINGS

Figure 1a is a flow diagram of a method for acquiring priori knowledge of color distortion in an imaging system according to an embodiment of the present invention.

Figure 1b is a schematic diagram of HLUT curve according to an embodiment of the present invention.

Figure 2 is a flow diagram of the method for correcting color distortion in the imaging system according to an embodiment of the present invention.

Figure 3 is a flow diagram of another method for acquiring priori knowledge of color distortion in an imaging system according to an embodiment of the present invention.

Figure 4 is a flow diagram of another method for correcting color distortion in an imaging system according to an embodiment of the present invention.

Figure 5 is a flow diagram of the method for acquiring priori knowledge of color distortion in an image output system according to an embodiment of the present invention.

Figure 6 is a flow diagram of the method for correcting color distortion in an imaging system according to an embodiment of the present invention.

Figure 7 is a flow diagram of another method for acquiring priori knowledge of color distortion in an image output system according to an embodiment of the present invention.

Figure 8 is a flow diagram of another method for correcting color distortion in an image output system according to an embodiment of the present invention.

Figure 9a is a schematic diagram of a color-distortion-correction device in an imaging system and a acquisition device of priori knowledge of color distortion thereof according to an embodiment of the present invention.

Figure 9b is an internal schematic diagram of an image data color correction module according to an embodiment of the present invention.

Figure 10 is another schematic diagram of a color-distortion-correction device in an imaging system and a acquisition device of priori knowledge of color distortion thereof according to an embodiment of the present invention.

Figure 11a is a schematic diagram of a color-distortion-correction device in an image output system and a acquisition device of priori knowledge of color distortion thereof according to an embodiment of the present invention.

Figure 11b is another internal schematic diagram of an image data color correction module according to an embodiment of the present invention.

Figure 12 is another schematic diagram of a color-distortion-correction device in image output system and a acquisition device of priori knowledge of color distortion thereof according to an embodiment of the present invention.

## Detailed description of the preferred embodiments

In order to make the object, advantages and technical solution of the present invention more clearer, detailed descriptions of the invention are given below by referring to the appended figures and listing preferred embodiments. However, it should be noted that many details listed in the Description only aim to make the readers thoroughly understand one or more aspects of the invention, and these aspects of the invention can be also achieved even if these specific details are absent.

The terms such as "module" and "system" used in the present application aim to include entities associated with the computer, for example but not limited to hardware, firmware, combination of software and hardware, software or software in execution. For example, the module can be, but not limited to: a process running on a processor, a processor, an object, an executable program, an executed thread, a program and/or a computer. For example, an application program running on a computer device and the computer device can be both modules. One or more modules can be located within one process and/or thread in execution, and one module can be also located on one computer and/or distributed between two or more computers.

In the present invention, it is to firstly obtain, in an imaging system or image output system, the priori knowledge of color distortion of the whole system link, then correct color images according to the priori knowledge of color distortion so as to obtain or output color images without color distortion. The technical solutions of the inventions are described in detail in connection with the appended figures.

In this disclosure, a HLUT refers to the color Hue transform LUT, a SLUT refers to the color Saturation LUT, an ILUT refers to the color intensity or color brightness or color value or color lightness or color luminance which are defined as Intensity or Brightness or Value or Lightness or Luminance, respectively.

In LCH , the HLUT refers to the color Hue transform LUT, the SLUT refers to color Saturation LUT, $S=C/SQRT(C2+L2)$, ILUT refers to intensity $I=SQRT(C2+L2)$.

In an HGICl, the HLUT refers to the color Hue transform LUT, the SLUT refers to color Saturation LUT, $S=C1/(G1+C1)$, ILUT refers to intensity $I=G1+C1$.

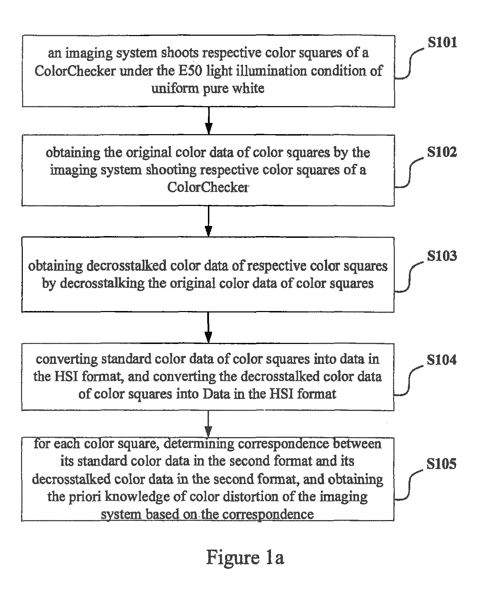

For an imaging system, it needs to get priori knowledge of color distortion of the imaging system before correcting the color distortion for the color image. Figure 1a shows a flow diagram of a method of acquiring priori knowledge of color distortion in an imaging system according to an embodiment of the present invention.

Step S101: an imaging system shoots respective color squares of a ColorChecker under the E50 light illumination condition of uniform pure white.

The number and type of color squares of the ColorChecker depends on the color accuracy required by the imaging system. That is, the higher the color accuracy of the imaging system required is, the more the number and type of color squares are. For example, for an 8-bit color accuracy, it needs to photographing color squares of $2^{24} = 16777216$.

Step S102: obtaining the original color data of color squares by the imaging system shooting respective color squares in a ColorChecker.

Particularly, after the imaging system shooting the respective color squares of the ColorChecker, the color squares are imaged and image data of color squares are generated in the imaging system. Image data of color squares are usually stored as the color data in an array of pixels, for example, the color data of image stored in a RGB format. Because colors of a color square are coincident, color data of each pixel in the image of a color square generated in the imaging system are basically coincident. Therefore, a certain pixel data, such as the pixel data of the center of a color square, is taken as the original color data for said color square. Alternatively, color data of pixels of said color square are averaged and the average value is taken as the original color data of said color square. The obtained original color data of a color square is referred as color data in the first format. The storage format of the original color data of the color square is generally directly related to the equipment features, and is usually described by R, G and B, i.e., red, green and blue colors or referred as the RGB format. In other words, in this disclosure, the first format is the color format of a device color space, for example, a RGB format or a CMY format used for printer. The obtained original color data of the color square in the first format may be color data in the RGB format, i.e., those three channel data values, wherein said three channels refer to R channel, G channel and B channel, and those three channel data values refers to red channel value $R_{GD}$, green channel value $G_{GD}$ and blue channel value $B_{GD}$. Actually, because camera lens, color CCD/CMOS photoelectric sensors, and ancillary processing lines of CCD/CMOS in the imaging system can lead to color deviation, $R_{GD}$, $G_{GD}$ and $B_{GD}$ may deviate from R, G, B standard values of the color square.

Step S103: obtaining decrosstalked color data of respective color squares by decrosstalking the original color data of color squares.

RGB channels of sensors of the imaging system are realized by using the optical spectrum (color) selectivity of colored glass. Physical implementation of filter characteristics of the colored glass is not able to make RGB isolation completely. Therefore, a photoreception in a sensitive channel (spectrum) of may be mixed with energy of other two channels (spectrum), it results in that sensed inference error is introduced into said sensitive channel. Since the physical filtering curve (interference curve) of each channel, i.e., an AQE curve, is part of the sensor's index, it is possible to realize the decrosstalking by obtaining the interference matrix based on the AQE curve.

At present, all sensors have the composition of the interference. In order to guarantee high precision color restoration, it is necessary to eliminate interference.

Firstly, decrosstalking the color data in the first format of each color square which are generated by the imaging system. That is, decrosstalking the original color data in RGB format of each color square, i.e., three channels data values $R_{GD}$, $G_{GD}$ and $B_{GD}$, based on the curve of absolute quantum efficiency of the sensor (AQE). Thus, color data in RGB format, i.e., $R_K$, $G_K$ and $B_K$ are obtained.

Therefore, decrosstalked color data of each color square is obtained. The decrosstalking is according to the following equation set 1.

$$R_{GD} = K_{rr}R_K + K_{gr}G_K + K_{br}B_K$$
$$G_{GD} = K_{rg}R_K + K_{gg}G_K + K_{bg}B_K \qquad \text{(Equation set 1)}$$
$$B_{GD} = K_{rb}R_K + K_{gb}G_K + K_{bb}B_K$$

• In the above equation 1, $K_{rr}$, $K_{gg}$, $K_{bb}$, $K_{rg}$, $K_{rb}$, $K_{gr}$, $K_{gb}$, $K_{br}$ and $K_{bb}$ are crosstalking parameters. Specifically, $K_{rr}$, $K_{gg}$ and $K_{bb}$ are self-coupling coefficients of sensors, $K_{rg}$, $K_{rb}$, $K_{gr}$, $K_{gb}$, $K_{br}$ and $K_{br}$ are coefficients of mutual interference of sensors. These parameters are obtained by measurement or estimation. For example, $K_{rr}$, $K_{gg}$, $K_{bb}$, $K_{rg}$, $K_{rb}$, $K_{gr}$, $K_{gb}$, $K_{br}$ and $K_{br}$ can be as below:

$$\begin{bmatrix} K_{rr} & K_{gr} & K_{br} \\ K_{rg} & K_{gg} & K_{bg} \\ K_{rb} & K_{gb} & K_{bb} \end{bmatrix} = \begin{bmatrix} 0.85 & 0.04 & 0.05 \\ 0.1 & 0.92 & 0.15 \\ 0.05 & 0.04 & 0.8 \end{bmatrix}$$

The following table 1 shows the correspondence between numerical RGB data before and after the decrosstalking operation.

Table 1

| No. | RGB data before decrosstalking | | | RGB data after decrosstalking | | |
|---|---|---|---|---|---|---|
| | $R_{GD}$ | $G_{GD}$ | $B_{GD}$ | $R_K$ | $G_K$ | $B_K$ |
| 1 | 109 | 83 | 73 | 115 | 82 | 69 |
| 2 | 196 | 161 | 147 | 204 | 160 | 141 |
| 3 | 108 | 136 | 169 | 101 | 135 | 179 |
| 4 | 92 | 106 | 70 | 92 | 109 | 61 |
| 5 | 143 | 139 | 183 | 140 | 137 | 194 |
| 6 | 142 | 221 | 155 | 132 | 228 | 142 |
| 7 | 225 | 117 | 58 | 249 | 115 | 35 |
| 8 | 86 | 96 | 163 | 80 | 93 | 182 |
| 9 | 204 | 98 | 126 | 222 | 91 | 126 |
| 10 | 89 | 66 | 112 | 90 | 63 | 123 |
| 11 | 183 | 224 | 117 | 183 | 232 | 91 |
| 12 | 234 | 160 | 58 | 255 | 162 | 26 |
| 13 | 50 | 60 | 124 | 44 | 57 | 142 |
| 14 | 95 | 143 | 86 | 90 | 148 | 74 |
| 15 | 159 | 48 | 57 | 179 | 42 | 52 |
| 16 | 236 | 215 | 63 | 250 | 222 | 21 |
| 17 | 179 | 89 | 151 | 191 | 81 | 161 |
| 18 | 27 | 134 | 159 | 6 | 137 | 172 |

If the amplitude of the AQE curve is not zero in the infrared spectrum, the above equation should be added with an infrared interference item, as shown in the following equation set:

$$R_{GD} = K_{rr}R_K + K_{gr}G_K + K_{br}B_K + K_{ir}Ir_K$$
$$G_{GD} = K_{rg}R_K + K_{gg}G_K + K_{bg}B_K + K_{ig}Ir_K \qquad \text{(equation set 2)}$$
$$B_{GD} = K_{rb}R_K + K_{gb}G_K + K_{bb}B_K + K_{ib}Ir_K$$

In the above equation set 2, $K_{rr}$, $K_{gg}$, $K_{bb}$, $K_{rg}$, $K_{rb}$, $K_{gr}$, $K_{gb}$, $K_{br}$, $K_{br}$ are crosstalking parameters. Specifically,

$K_{rr}$, $K_{gg}$ and $K_{bb}$ are self-coupling coefficients of sensors, $K_{rg}$, $K_{rb}$, $K_{gr}$, $K_{gb}$, $K_{br}$ and $K_{br}$ are coefficients of mutual interference of sensors, $K_{ir}$, $K_{ig}$ and $K_{ib}$ are interference coefficients in the infrared spectrum of sensors. These parameters are obtained by measurement or estimation.

Step S104: converting standard color data of color squares into Data in the HSI format, and converting the decrosstalked color data of color squares into Data in the HSI format.

Actually, it is difficult to use color data in the first format to intuitively describe distortion characteristics. Therefore, many other data formats for color spaces which are based on the color appearance attributes of a color hue "Hue", such as HSI, HSV, HSB, HSL, LCH, HGICI, etc., are convenient for operation and are used. In this disclosure, those formats for color data, which facilitate distortion correction, are referred to the second format. That is, the second format includes HSI format, HSV format, HSB format, HSL format, LCH format, HGICI format, etc. In the present Description, the invention is described by using the HSI format as the second format. For a technical solution using other formats, the detailed descriptions are similar to those of the embodiments of the present invention, and thus are omitted for clarity and concise. Usually, standard color data of color squares is referred to color data in the first format.

Actually, because camera lens, color CCD/CMOS photoelectric sensors, and ancillary processing lines of CCD/CMOS in the imaging system may cause a color data deviation of the color squares photographed by the imaging system, standard color data of the color square may have a deviation with respect to the original data of said color square in the imaging system.

At step S104, color data of each color square being removed interference in the imaging system, such as decrosstalked color data in the RGB format, $R_K$, $G_K$ and $B_K$ are converted into data in the HSI format, i.e., $H_K$, $S_K$ and $I_K$, and thus decrosstalked data in the HSI format are obtained.

Standard color data of each color square, such as standard color data in the RGB format are converted into data in the HSI format, i.e., $H_S$, $S_S$ and $I_S$, and thus standard color data in the second format of each color square. Because conversion of color data in the RGB format into data in the HSI format is familiar to the skilled in the art, the details are omitted herein. The following table 2 shows correspondences between standard color data in the RGB format of each color square of a color card and the data in the HSI format.

Table 2

| No. | Standard color data in the RGB format of color squares | | | Corresponding data in the HSI format | | |
|-----|-------|-------|-------|-------|-------|-------|
| | $R_{GD}$ | $G_{GD}$ | $B_{GD}$ | $H_s$ | $S_s$ | $I_s$ |
| 1 | 115 | 82 | 69 | 17 | 40 | 115 |
| 2 | 204 | 161 | 141 | 19 | 31 | 204 |
| 3 | 101 | 134 | 179 | 217 | 44 | 179 |
| 4 | 89 | 109 | 61 | 85 | 44 | 109 |
| 5 | 141 | 137 | 194 | 244 | 29 | 194 |
| 6 | 132 | 228 | 208 | 168 | 42 | 228 |
| 7 | 249 | 118 | 35 | 23 | 86 | 249 |
| 8 | 80 | 91 | 182 | 234 | 56 | 182 |
| 9 | 222 | 91 | 125 | 344 | 59 | 222 |
| 10 | 91 | 63 | 123 | 268 | 49 | 123 |
| 11 | 173 | 232 | 91 | 85 | 61 | 232 |
| 12 | 255 | 164 | 26 | 36 | 90 | 255 |
| 13 | 44 | 56 | 142 | 237 | 69 | 142 |
| 14 | 74 | 148 | 81 | 127 | 50 | 148 |
| 15 | 179 | 42 | 50 | 356 | 77 | 179 |
| 16 | 250 | 226 | 21 | 54 | 92 | 250 |
| 17 | 191 | 81 | 160 | 317 | 58 | 191 |
| 18 | 6 | 142 | 172 | 191 | 97 | 172 |

Table 3 shows correspondences between decrosstalked color data in the RGB format of color squares in ColorChecker and corresponding data in the HSI format.

Table 3

| No. | Decrosstalked color data in the RGB format of color squares | | | Data in the HSI format | | |
|---|---|---|---|---|---|---|
| | $R_K$ | $G_K$ | $B_K$ | H(rad) | S | I |
| 1 | 115 | 82 | 69 | 17 | 40 | 115 |
| 2 | 204 | 160 | 141 | 18 | 31 | 204 |
| 3 | 101 | 135 | 179 | 214 | 44 | 179 |
| 4 | 92 | 109 | 61 | 81 | 44 | 109 |
| 5 | 140 | 137 | 194 | 244 | 29 | 194 |
| 6 | 132 | 228 | 142 | 126 | 42 | 228 |
| 7 | 249 | 115 | 35 | 22 | 86 | 249 |
| 8 | 80 | 93 | 182 | 233 | 56 | 182 |
| 9 | 222 | 91 | 126 | 344 | 59 | 222 |
| 10 | 90 | 63 | 123 | 267 | 49 | 123 |
| 11 | 183 | 232 | 91 | 81 | 61 | 232 |
| 12 | 255 | 162 | 26 | 36 | 90 | 255 |
| 13 | 44 | 57 | 142 | 232 | 69 | 142 |
| 14 | 90 | 148 | 74 | 107 | 50 | 148 |
| 15 | 179 | 42 | 52 | 356 | 77 | 179 |
| 16 | 250 | 222 | 21 | 53 | 92 | 250 |
| 17 | 191 | 81 | 161 | 316 | 58 | 191 |
| 18 | 6 | 137 | 172 | 192 | 97 | 172 |

Step S105: for each color square, determining correspondence between its standard color data in the second format and its decrosstalked color data in the second format, and obtaining the priori knowledge of color distortion of the imaging system based on the correspondence.

For each color square, the establishment of correspondence between standard color data in the second format of one color square and the decrosstalked color color data in the second format of said one color square may be as follows. For example, for one color square, it's color data in the second format are HSI format standard color data, i.e., $H_S$, $S_S$ and $I_S$, and the decrosstalked color data in the second format of said one color square are $H_K$, $S_K$ and $I_K$, the correspondences between data $H_S$, $S_S$ and $I_S$ and data $H_K$, $S_K$ and $I_K$ are established. Since the data in the HSI format is expressed by three components H, S and I, the correspondences between data in the HSI format may be embodied as correspondences of each of components H, S and I, correspondence between $H_S$ and $H_K$, correspondence between $S_S$ and $S_K$, correspondence between $I_S$ and $I_K$. This is to say, the correspondences between standard color data in the second format of the color square and the decrosstalked color data in the second format of said color square can be embodied as three components of data in the second format, said three components are color hue component Hue, color saturation component Saturation, and color intensity(or brightness) component Intensity. According to the correspondence related to each of the three data components, three curves, i.e., HLUT curve, SLUT curve and ILUT curve are drawn, respectively.

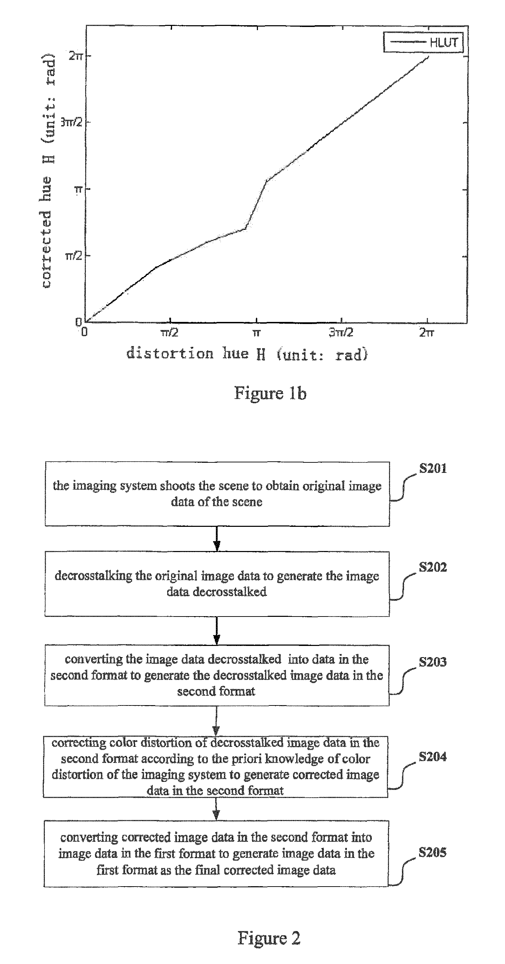

For example, in case the second format is a HSI format, a HLUT curve may be drawn based on correspondence of the H components between standard color data in the HSI format of a color square and the decrosstalked data in the HSI format of said color square, for all color squares. Figure 1b shows a HLUT curve, which is fitted in a coordinate system in which the H component of the decrosstalked color data in the second format of a color square is horizontal axis, and the H component of standard color data in the second format of a color square is vertical axis. Certainly, the HLUT curve may also be fitted in a coordinate system in which the H component of standard color data in the second format of a color square is horizontal axis, and the H component of the decrosstalked color data in the second format of a color square is vertical axis.

a SLUT curve may be drawn based on correspondence of the S components between standard color data in the HSI format of a color square and the decrosstalking data in the HSI format of said color square, for all color squares. A HLUT curve may be fitted in a coordinate system in which the S component of the decrosstalked color data in the second format of a color square is horizontal axis, and the S component of standard color data in the second format of a color square is vertical axis. Certainly, the SLUT curve may also be fitted in a coordinate system in which the S component of standard color data in the second format of a color square is horizontal axis, and the S component of the decrosstalked color data in the second format of a color square is vertical axis.

an ILUT curve may be drawn based on correspondence of the I components between standard color data in the HSI format of a color square and the decrosstalked data in the HSI format of said color square, for all color squares. An ILUT curve may be fitted in a coordinate system in which the I component of the decrosstalked color data in the second format of a color square is horizontal axis, and the I component of standard color data in the second format of a color square is vertical axis. Certainly, the ILUT curve may also be fitted in a coordinate system in which the I component of standard color data in the second format of a color square is horizontal axis, and the I component of the decrosstalked color data in the second format of a color square is vertical axis.

In this disclosure, HLUT, SLUT and ILUT not only refers to HLUT,SLUT and ILUT in the color appearance space of HSI, but also refers to HLUT,SLUT and ILUT in any color appearance space that contains the color hue "Hue", color saturation "Saturation" and color intensity "Intensity", regardless of the definition of color hue, color saturation and color intensity in their own color appearance space. The HLUT refers to the color Hue transformation LUT, the SLUT refers to the color Saturation transformation LUT, ILUT refers to the broad sense color intensity transformation LUT, wherein the broad sense color intensity transformation contains the color intensity, color brightness, color value, color lightness or color luminance.

In this disclosure, the generation of the HLUT curve, SLUT curve and ILUT curve is described based on the HSI format. For other formats defined in the second format, the generation of HLUT curve, SLUT curve and ILUT curve according to correspondences between standard color data in the second format of a color square and the decrosstalked color data in the second format of said color square is similar to the above, and thus details are omitted herein.

However, in other color appearance space, color saturation and color intensity may be defined not as in HSI space. For example, in LCH, color saturation is defined as $S = C/SQRT(C^1+L^2)$, color intensity is defined as $I=SQRT(C^2+L^2)$. In HG1C1, color saturation is defined as $S=C1(G1+C1)$, color intensity is defined as $I= GI+CI$.

Table 4 shows the correspondence between standard color data in the HSI format of a color square and decrosstalked data in the HSI format of said color square.

Table 4

| No. | Decrosstalked data in the HSI format of color squares | | | standard color data in the HSI format of color squares | | |
|---|---|---|---|---|---|---|
| | H | S | I | $H_s$ | $S_s$ | $I_s$ |
| 1 | 17 | 40 | 115 | 17 | 40 | 115 |
| 2 | 18 | 31 | 204 | 19 | 31 | 204 |
| 3 | 214 | 44 | 179 | 217 | 44 | 179 |
| 4 | 81 | 44 | 109 | 85 | 44 | 109 |
| 5 | 244 | 29 | 194 | 244 | 29 | 194 |
| 6 | 126 | 42 | 228 | 168 | 42 | 228 |
| 7 | 22 | 86 | 249 | 23 | 86 | 249 |
| 8 | 233 | 56 | 182 | 234 | 56 | 182 |
| 9 | 344 | 59 | 222 | 344 | 59 | 222 |
| 10 | 267 | 49 | 123 | 268 | 49 | 123 |
| 11 | 81 | 61 | 232 | 85 | 61 | 232 |
| 12 | 36 | 90 | 255 | 36 | 90 | 255 |
| 13 | 232 | 69 | 142 | 237 | 69 | 142 |
| 14 | 107 | 50 | 148 | 127 | 50 | 148 |
| 15 | 356 | 77 | 179 | 356 | 77 | 179 |
| 16 | 53 | 92 | 250 | 54 | 92 | 250 |
| 17 | 316 | 58 | 191 | 317 | 58 | 191 |
| 18 | 192 | 97 | 172 | 191 | 97 | 172 |

To facilitate storage and operation, HLUT, SLUT, ILUT curves can be saved in the form of function, or in the form of table. If HLUT, SLUT and ILUT curves are saved in the form of function, then the curve function of HLUT, curve function of SLUT and curve function of ILUT are priori knowledge of color distortion in the imaging system. If HLUT, SLUT and ILUT curves are saved in the form of table, then the curve table of HLUT, curve table of SLUT and curve table of ILUT are priori knowledge of color distortion in the imaging system.

After acquiring priori knowledge of color distortion of the imaging system, i.e., the curve function of HLUT, the curve function of SLUT and the curve function of ILUT, or the curve table of HLUT, the curve table of SLUT and the curve table of ILUT, the acquired priori knowledge is stored in the imaging system. The imaging system can use the priori knowledge of color distortion to correct the photographed image. According to an embodiment of the invention, a method of correcting color distortion in an imaging system is shown in figure 2.

Step S201: the imaging system shoots the scene to obtain original image data of the scene.

In case the scene is shot by the imaging system, images are usually stored as color data in a pixel array, for example, color data in the RGB format. Here, the image data not being corrected the color distortion is referred to the original image data. For example, the image data of images captured by the imaging system is referred to the original image data before being corrected the color distortion. The original image data is in the first format.

Step S202:decrosstalking the original image data to generate the image data decrosstalked.

The way to eliminate interference of the original image data is the same as that at step S103, and thus details are omitted. The image data decrosstalked is generated after decrosstalking the original image data. If the original image data is RGB format data, the image data decrosstalked is also RGB format data.

The following table 5 shows the correspondence between the original image data and the decrosstalked color data in the RGB format.

Table 5

| No. | original image data | | | Decrosstalked color data in the RGB format | | |
|---|---|---|---|---|---|---|
| | $R_{GD}$ | $G_{GD}$ | $B_{GD}$ | $R_K$ | $G_K$ | $B_K$ |
| 1 | 165 | 251 | 137 | 157 | 261 | 112 |
| 2 | 204 | 43 | 178 | 225 | 28 | 203 |
| 3 | 116 | 27 | 170 | 123 | 15 | 202 |
| 4 | 110 | 95 | 45 | 116 | 97 | 31 |
| 5 | 210 | 51 | 33 | 241 | 44 | 18 |
| 6 | 34 | 87 | 44 | 27 | 92 | 36 |
| 7 | 100 | 235 | 143 | 81 | 246 | 127 |
| 8 | 205 | 188 | 171 | 209 | 188 | 165 |
| 9 | 15 | 69 | 49 | 6 | 73 | 47 |
| 10 | 102 | 108 | 94 | 102 | 109 | 91 |
| 11 | 134 | 140 | 117 | 134 | 141 | 111 |
| 12 | 106 | 240 | 250 | 80 | 246 | 261 |
| 13 | 167 | 107 | 40 | 183 | 108 | 18 |
| 14 | 160 | 251 | 218 | 145 | 257 | 215 |
| 15 | 74 | 77 | 164 | 68 | 73 | 187 |
| 16 | 110 | 179 | 96 | 103 | 187 | 79 |

Step S203: converting the image data decrosstalked into data in the second format to generate the decrosstalked image data in the second format.

For example, the decrosstalked image data in the RGB format is converted into the data in the HSI format, and thus the decrosstalked image data in the second format is obtained.

Step S204: correcting color distortion of decrosstalked image data in the second format according to the priori knowledge of color distortion of the imaging system to generate corrected image data in the second format.

According to priori knowledge of color distortion in the imaging system, for instance, the curve function of HLUT, the curve function of SLUT and the curve function of ILUT, data in the second format corresponding to decrosstalked image data in the second format is determined and thus corrected image data in the second format is obtained. Particularly, the decrosstalked image data in the second format is substituted in the curve function of HLUT, the curve function of SLUT and the curve function of ILUT to calculate the corresponding data in the second format, so as to determine corrected image data in the second format. For example, in case that the second format is the HSI format, pixel data of one pixel of decrosstalked image data in the second format are $H_1$, $S_1$, $I_1$. If $H_1$ is substituted in curve function of HLUT to calculate H component $H_2$ of the corresponding data in the HSI format, $S_1$ is substituted in curve function of SLUT to calculate S component $S_2$ of the corresponding data in the HSI format, $I_1$ is substituted in curve function of ILUT to calculate I component $I_2$ of the corresponding data in the HSI format, data $H_2$, $S_2$ and $I_2$ of the data in the HSI format for the pixel are obtained after correction.

Alternatively, according to priori knowledge of color distortion in the imaging system, for instance, the curve table of HLUT, the curve table of SLUT and the curve table of ILUT, the data in the HSI format corresponding to decrosstalked image data in the second format is determined and thus corrected image data in the second format is obtained. Particularly, a search is made in the curve table of HLUT, the curve table of SLUT and the curve table of ILUT to find out the data in the HSI format so as to determine corrected image data in the second format. For example, in case that the second format is the HSI format, pixel data of one pixel of decrosstalked image data in the second format are $H_1$, $S_1$, $I_1$. It is possible to find out that an H value in curve table of HLUT corresponds to $H_1$, provided it is $H_2$ in the curve table of HLUT corresponds to $H_1$. It is possible to find out that an S value in curve table of SLUT corresponds to $S_1$, provided it is $S_2$ in the curve table of SLUT corresponds to $S_1$. It is also possible to find out that an I value in curve table of ILUT corresponds to $I_1$, provided it is $I_2$ in the curve table of ILUT corresponds to $I_1$. Therefore, $H_2$, $S_2$ and $I_2$ are the HSI format corrected data for the pixel.

Table 6 shows the correspondence between the decrosstalked image data in the second format and corrected image data in the second format (i.e., standard data in the HSI format of color square). The correspondence may be stored in the curve table of HLUT, the curve table of SLUT and curve table of ILUT.

Table 6

| No. | the decrosstalked image data in the second format | | | corrected image data in the second format | | |
|---|---|---|---|---|---|---|
| | H (rad) | S | I | $H_{new}$ (rad) | $S_{new}$ | $I_{new}$ |
| 1 | 105 | 45 | 251 | 123 | 45 | 251 |
| 2 | 310 | 79 | 204 | 310 | 79 | 204 |
| 3 | 277 | 84 | 170 | 278 | 84 | 170 |
| 4 | 46 | 59 | 110 | 47 | 59 | 110 |
| 5 | 6 | 84 | 210 | 7 | 84 | 210 |
| 6 | 131 | 61 | 87 | 170 | 61 | 87 |
| 7 | 139 | 57 | 235 | 172 | 57 | 235 |
| 8 | 30 | 17 | 205 | 30 | 17 | 205 |
| 9 | 158 | 78 | 69 | 179 | 78 | 69 |
| 10 | 86 | 13 | 108 | 92 | 13 | 108 |
| 11 | 76 | 16 | 140 | 77 | 16 | 140 |
| 12 | 184 | 58 | 250 | 188 | 58 | 250 |
| 13 | 32 | 76 | 167 | 33 | 76 | 167 |
| 14 | 158 | 36 | 251 | 179 | 36 | 251 |
| 15 | 238 | 55 | 164 | 238 | 55 | 164 |
| 16 | 110 | 46 | 179 | 131 | 46 | 179 |

Step S205: converting corrected image data in the second format into image data in the first format to generate image data in the first format as the final corrected image data.

Because conversion of image data in the HSI format to data in the RGB format is well known in the art, details are omitted herein.

After obtaining priori knowledge of color distortion in an imaging system by the method shown in figure 1a, color images shot by the imaging system could be corrected a color distortion by the method of figure 2, and thus color images without color distortion are obtained. When correcting color distortion of the color image each time, it does not need repeatedly to obtain priori knowledge of color distortion in the imaging system through the method as shown in figure 1a, it only needs to utilize the priori knowledge of color distortion stored in advance to make a color-distortion-correction.

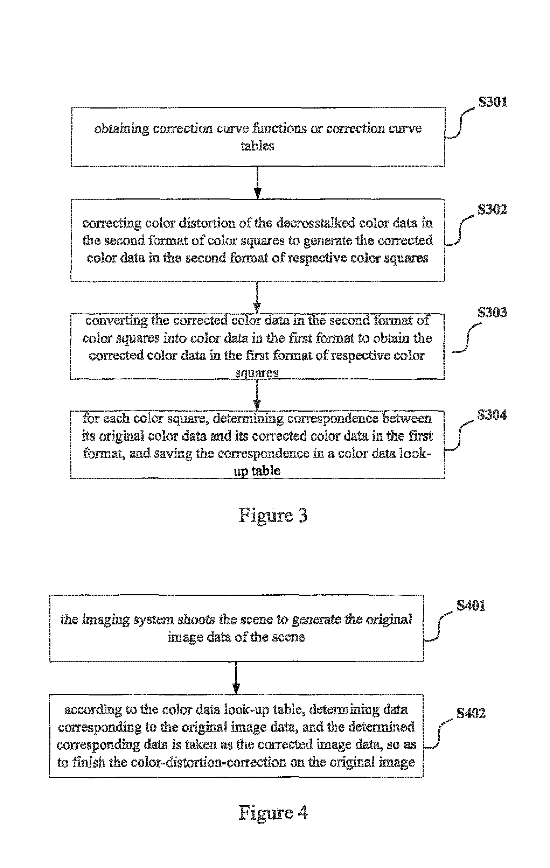

Figure 3 is a flow diagram of another method for acquiring priori knowledge of color distortion in an imaging system according to an embodiment of the present invention.

Step S301: obtaining correction curve functions or correction curve tables. Particularly, the correction curve functions, i.e., a curve function of HLUT, a curve function of SLUT and a curve function of ILUT, or correction curve tables, i.e., a curve table of HLUTs, a curve table of SLUT and a curve table of ILUT, are determined according to the method of steps S101-S105.

Step S302: correcting color distortion of the decrosstalked color data in the second format of color squares to generate the corrected color data in the second format of respective color squares.

The method of obtaining the decrosstalked color data in the second format for each color square has been described at steps S101-S104, and thus details are omitted herein.

For the decrosstalked color data in the second format of each color square, the corresponding color data in the second format is calculated according to the correction curve function, said corresponding color data in the second format is the corrected color data in the second format of the color squares.

Alternatively, for the decrosstalked color data in the second format of each color square, the correction curve table is searched to find out the corresponding color data in the second format corresponding to the decrosstalked color data in the second format, said corresponding color data in the second format is the corrected color data in the second format of the color squares.

S303: converting the corrected color data in the second format of color squares into color data in the first format to obtain the corrected color data in the first format of respective color squares.

S304: for each color square, determining correspondence between its original color data and its corrected color data in the first format, and saving the correspondence in a color data look-up table.

Provided that the original color data of one color square are $R_{GD}$, $G_{GD}$ and $B_{GD}$, the corrected color data in the first format of said one color square are $R_S$, $G_S$ and $B_S$, the correspondence between data $R_{GD}$, $G_{GD}$ and $B_{GD}$ and data $R_S$, $G_S$ and $B_S$ is stored in a three-dimensional color data look-up table. Accordingly, the three-dimensional color data look-up table is priori knowledge of color distortion in the imaging system. For example, if each of the $R_{GD}$ value, the $G_{GD}$ value and the $B_{GD}$ value is expressed by 8 bit data, there are up-to 16777216 combinations, and thus there are 16777216 values of $R_S$, $G_S$ and $B_S$ corresponding to values of $R_{GD}$, $G_{GD}$ and $B_{GD}$ in the color data look-up table.

Table 7 shows the correspondence between the original color data of color squares and the corrected color data of said color squares. The correspondence may be stored in the color data look-up table as the priori knowledge of color distortion of the imaging system.

Table7

| No. | Original color data of color squares | | | Corrected color data of color squares | | |
|---|---|---|---|---|---|---|
| | $R_{GD}$ | $G_{GD}$ | $B_{GD}$ | $R_S$ | $G_S$ | $B_S$ |
| 1 | 165 | 251 | 137 | 138 | 251 | 143 |
| 2 | 204 | 43 | 178 | 204 | 43 | 177 |
| 3 | 116 | 27 | 170 | 117 | 27 | 170 |
| 4 | 110 | 95 | 45 | 110 | 96 | 45 |
| 5 | 210 | 51 | 33 | 210 | 54 | 34 |
| 6 | 34 | 87 | 44 | 34 | 87 | 78 |
| 7 | 100 | 235 | 143 | 101 | 235 | 218 |
| 8 | 205 | 188 | 171 | 205 | 188 | 170 |
| 9 | 15 | 69 | 49 | 15 | 69 | 68 |
| 10 | 102 | 108 | 94 | 100 | 108 | 94 |
| 11 | 134 | 140 | 117 | 134 | 140 | 118 |
| 12 | 106 | 240 | 250 | 105 | 231 | 250 |
| 13 | 167 | 107 | 40 | 167 | 109 | 40 |
| 14 | 160 | 251 | 218 | 161 | 251 | 250 |
| 15 | 74 | 77 | 164 | 74 | 76 | 164 |
| 16 | 110 | 179 | 96 | 97 | 179 | 111 |

After obtaining priori knowledge of color distortion in the imaging system, i.e., the color data look-up table, based on the method of figure 3, the obtained color data look-up table is stored in the imaging system in advance. Thereafter, the imaging system is capable of correcting color distortion of the captured images by using the color data look-up table. As shown in figure 4, a method of color-distortion-correction in the imaging system is provided.

Step S401: the imaging system shoots the scene to generate the original image data of the scene.

After the scene is shot by the imaging system, images are usually stored as color data in a pixel array, for example, color data in the RGB format. The image data of images shot by the imaging system is referred to the original image data before being corrected color distortion. The original image data is image data in the first format.

S402: according to the color data look-up table, determining data corresponding to the original image data, and the determined corresponding data is taken as the corrected image data, so as to finish the color-distortion-correction on the original image.

Specifically, for the original image data, the color data look-up table obtained by using the method shown in figure 3 is searched to determine the data corresponding to the original image, and the determined data corresponding to the original image data is taken as the corrected image data. For example, for data of one pixel in the original image data are $R_{GD}$, $G_{GD}$ and $B_{GD}$, if the corresponding data in the tables are $R_S$, $G_S$ and $B_S$, then the data $R_S$, $G_S$ and $B_S$, are considered as the corrected image data for the pixel.

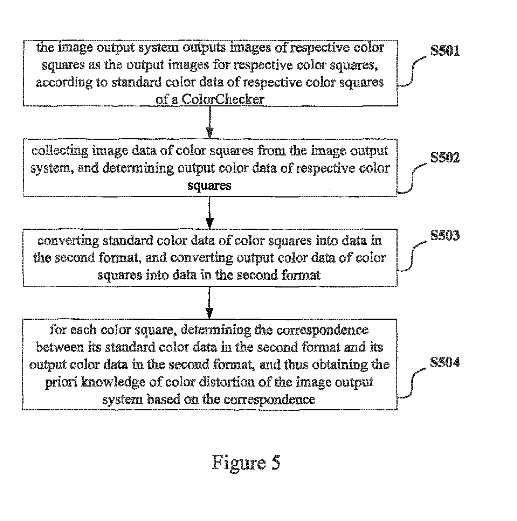

an image output system, such as a printer, a projector, display etc., may also correct color distortion of the color images to be output by using priori knowledge of color distortion obtained and stored in the image output system in advance. According to an embodiment of the invention, a method of obtaining the priori knowledge of color distortion for an output image system is provided, as shown in figure 5.

Step S501: the image output system outputs images of respective color squares as the output images for respective color squares, according to standard color data of respective color squares of a ColorChecker.

For example, standard color data of one color square are $R_S$, $G_S$ and $B_S$, the output system output an image for said one color square according to the standard color data. The output image may be a rectangular block, in which color data of all pixels are $R_S$, Gs and Bs.

S502: collecting image data of color squares from the image output system, and determining output color data of respective color squares.

Image data of respective color squares output from the image output system are collected by a non-distortion image data collecting system, and color data of pixels in the collected image data are considered as out color data for the corresponding respective color squares, wherein the output color data for a color square are color data in the first format. Particularly, for the collected output image data for the same one color square, color data of all pixels in the output data shall be basically the same. Therefore, color data of any one pixel thereof may be taken as output color data for the color square. Alternatively, the average of color data of all pixels is taken as the output color data for the color square.

Step S503: Converting standard color data of color squares into data in the second format, and converting output color data of color squares into data in the second format, for example, data in the HSI format.

Standard color data of a color square are image data in the first format. Actually, the image output system itself may cause a color deviation, for example, due to the printing ink. Therefore, it may results in that a color deviation occurs in the output color data of various color squares. That is, there is a deviation between the output color data of a color square and the standard color data of said color square.

After converting standard color data of respective color squares into data in the HSI format, the color data in the second format of respective color squares are obtained. After converting output color data of respective color squares into data in the HSI format, output color data in the second format of respective color squares are obtained.

Step S504: for each of all color squares, determining the correspondence between its standard color data in the second format and its output color data in the second format, and thus obtaining the priori knowledge of color distortion of the image output system based on the correspondence.

For respective color squares, the correspondence between standard color data in the second format of a color square and output color data in the second format of said color square is determined. For example, for one color square, it's standard color data in the second format are $H_S$, $S_S$ and $I_S$, and it's output color data in the second format are $H_W$, $S_W$ and $I_W$, the correspondence between data $H_S$, $S_S$ and $I_S$ and data $H_W$, $S_W$ and $I_W$ is determined Since the data in the HSI format are expressed by three components H, S and I, the correspondence between data in the HSI format may be correspondence related to each of the three components. In particular, the correspondences are the correspondence between $H_S$ and $H_W$, the correspondence between $S_S$ and $S_W$, and the correspondence between Is and $I_W$, respectively. The HLUT curve, the SLUT curve and ILUT curve are drawn respectively by fitting corresponding data according to correspondence of data related to each of the three components namely H, S and I.

That is to say, for all color squares in the whole range, the HLUT curve is fitted according to the multiple correspondences each is the H component corresponding between the H component of standard color data in the second format of a color square and the H component of output color data in the second format of said color square.

For all color squares in the whole range, the SLUT curve is fitted according to the multiple correspondences each is the S component corresponding between the S component of standard color data in the second format of a color square and the S component of output color data in the second format of said color square.

For all color squares in the whole range, the ILUT curve is fitted according to the multiple correspondences each is the I component corresponding between the I component of standard color data in the second format of a color square and the I component of output color data in the second format of said color square.

To facilitate storage and operation, HLUT, SLUT, ILUT curves can be saved in the form of function, or in the form of table. If HLUT, SLUT and ILUT curves are saved in the form of function, then the curve function of HLUT, curve function of SLUT and curve function of ILUT are priori knowledge of color distortion in the imaging system. If HLUT, SLUT and ILUT curves are saved in the form of table, then the curve table of HLUT, curve table of SLUT and curve table of ILUT are priori knowledge of color distortion in the image output system.

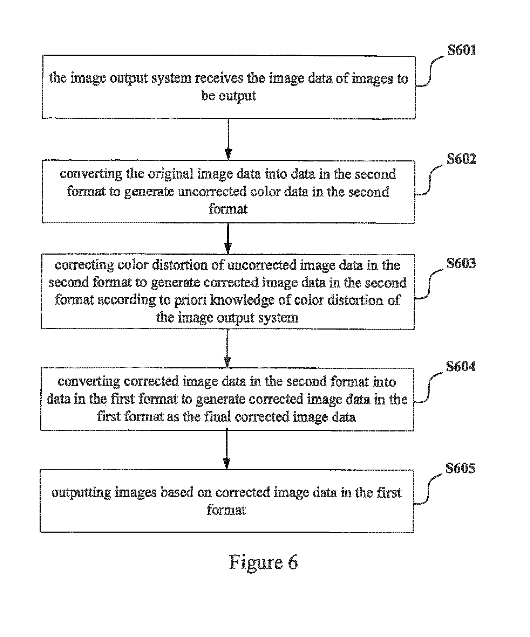

After acquiring priori knowledge of color distortion of the image output system, i.e., the curve function of HLUT, the curve function of SLUT and the curve function of ILUT, or the curve table of HLUT, the curve table of SLUT and the Curve table of ILUT, the acquired priori knowledge is stored in the image output system. The image output system can use the priori knowledge of color distortion to correct color distortion of the color image before outputting it. According to an embodiment of the invention, a method of correcting color distortion in an image output system is shown in figure 6.

Step S601: the image output system receives the image data of images to be output.

Image data of images received by the image output system are usually stored as color data in the first format in a pixel array, for example, the stored color data in the RGB format. Here, the image data not being corrected the color distortion is referred to the original image data. For example, the image data being output from the image output system, before being corrected the color distortion, is referred to the original image data.

Step S602: converting the original image data into data in the second format to generate the second format uncorrected color data. The method of converting image data in the first format into image data in the second format is the same as that described at step S203 and thus is omitted herein.

Step S603: correcting color distortion of uncorrected image data in the second format to generate corrected image data in the second format according to priori knowledge of color distortion of the image output system. The correction is as follows: if priori knowledge of color distortion, for instance, the correspondence between standard color data in the second format of a color square and output color data in the second format of said color square indicated by the curve function of HLUT, the curve function of SLUT and the curve function of ILUT, is obtained based on the method of figure 5, uncorrected image data in the second format is used as output color data in the second format of a color square and is substituted in the curve function of HLUT, the curve function of SLUT and the curve function of ILUT, respectively, to calculate the corresponding standard color data in the second format of the color square, and the calculated corresponding standard color data in the second format of the color square is taken as corrected image data in the second format.

Alternatively, the correspondence between standard color data in the second format of a color square and output color data in the second format of said color square is indicated by the curve table of HLUT, the curve table of SLUT and the curve table of ILUT. Output color data in the second format of a color square in the curve table of HLUT, the curve table of SLUT and the curve table of ILUT are searched to obtain data identical with uncorrected image data in the second format. Further, data in the second format corresponding to the obtained data is determined based on correspondences in the curve table of HLUT, the curve table of SLUT and the curve table of ILUT, and then the determined data in the second format is taken as corrected image data in the second format.

Step S604: converting corrected image data in the second format into data in the first format to generate the corrected image data in the first format as the final corrected image data.

Step S605: outputting images based on the corrected image data in the first format.

Specifically, the printing, projecting or displaying are based on the corrected image data in the RGB format. Therefore, color images without color distortion are output.

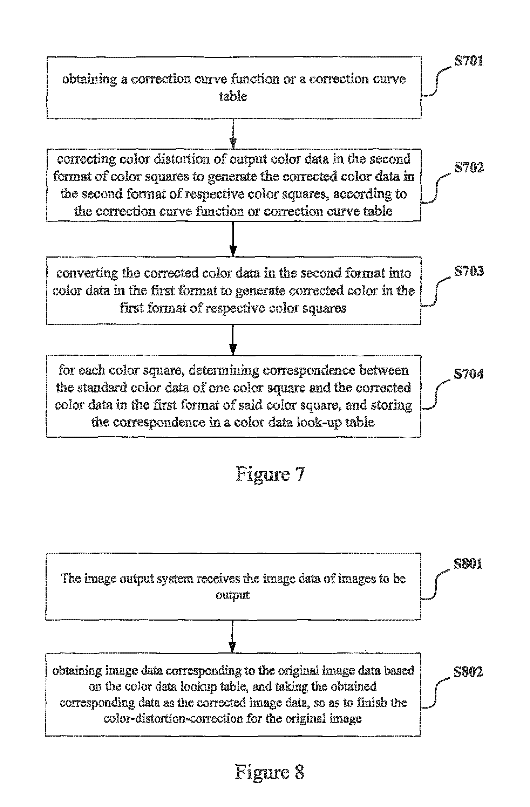

According to an embodiment of the invention, there is provided that a method of obtaining priori knowledge of color distortion of an image output system. As shown in figure 7, the method includes the following steps.

Step S701: obtaining a correction curve function or a correction curve table.

Specifically, the correction curve functions such as the curve function of HLUT, the curve function of SLUT and curve function of ILUT, or the correction curve tables such as the curve table of HLUT, the curve table of SLUT and Curve table of ILUT are determined according to the method of steps S501-S504.

Step S702: correcting color distortion of output color data in the second format of color squares to generate the corrected color data in the second format of respective color squares, according to the correction curve function or correction curve table.

The method of obtaining output color data in the second format of respective color squares has been described at steps of S501-S503, and thus it does not need to repeat it.

Specific correction is as follows. If priori knowledge of color distortion, for instance, the correspondence between standard color data in the second format of a color square and output color data in the second format of said color square indicated by the curve function of HLUT, the curve function of SLUT and the curve function of ILUT, is obtained based on the method of figure 5, uncorrected image data in the second format is used as output color data in the second format of a color square and is substituted in the curve function of HLUT, the curve function of SLUT and the curve function of ILUT, respectively, to calculate the corresponding standard color data in the second format of the color square, and the calculated corresponding standard color data in the second format of the color square is taken as corrected image data in the second format of the color square.

Alternatively, the correspondence between standard color data in the second format of a color square and output color data in the second format of said color square is indicated by the curve table of HLUT, the curve table of SLUT and the curve table of ILUT. Output color data in the second format of a color square in the curve table of HLUT, the curve table of SLUT and the curve table of ILUT are searched to obtain data identical with output color data in the second format. Further, data in the second format corresponding to the obtained data is determined based on correspondences in the curve table of HLUT, the curve table of SLUT and the curve table of ILUT, and then the determined data in the second format is taken as the corrected color data in the second format.

Step S703: converting the corrected color data in the second format into color data in the first format to generate corrected color in the first format of respective color squares.

Step S704: for respective color squares, determining correspondence between the standard color data of one color square and the corrected color data in the first format of said one color square, and storing the correspondence in a color data look-up table.

Provided that the standard color data of one color square are $R_{GD}$, $G_{GD}$ and $B_{GD}$, the corrected color data in the first format of said one color square are $R_S$, $G_S$ and $B_S$, the correspondence between data $R_{GD}$, $G_{GD}$ and $B_{GD}$ and data $R_S$, $G_S$ and $B_S$ is stored in a three-dimensional color data look-up table. Accordingly, the three-dimensional color data look-up table is priori knowledge of color distortion in the imaging system. For example, if each of the $R_{GD}$ value, the $G_{GD}$ value and the $B_{GD}$ value is expressed by 8 bit data, there are up-to 16777216 combinations, and thus there are 16777216 values of $R_S$, $G_S$ and $B_S$ corresponding to values of $R_{GD}$, $G_{GD}$ and $B_{GD}$ in the color data look-up table.

After obtaining priori knowledge of color square in the image output system based on the method of figure 7, that is, after obtaining the color data look-up table, the obtained color data look-up table is stored in the image output system in advance. Thereafter, the image output system may correct a color distortion of on the images to be output based on the color data look-up table, so as to output color images without any color distortion. According to an embodiment of the invention, another method of correcting color distortion in an image output system is provided. As shown in figure 8, the method includes the following steps.

Step S801: the image output system receives the image data of images to be output.

Image data of images received by the image output system are usually stored as color data in the first format in a pixel array, for example, the stored color data in the RGB format. Here, the image data not being corrected the color distortion is referred to the original image data. For example, the image data being output from the image output system, before being corrected the color distortion, is referred to the original image data.

S802: obtaining image data corresponding to the original image data based on the color data lookup table, and taking the obtained corresponding data as the corrected image data, so as to finish the color-distortion-correction for the original image.

Specifically, since the color data look-up table obtained by the method of figure 7 stores the correspondence between the standard color data of a color square and the corrected color data in the first format of the color square, it is possible to search the standard color data of color squares in the color data look-up table obtained by the method of figure 7 to obtained data same as the original color data. Data corresponding to the obtained data is determined according to the correspondence in the color data look-up table, and the determined data is taken as the corrected image data. For example, if data of a pixel in the original image data are $R_{GD}$, $G_{GD}$ and $B_{GD}$, data same as $R_{GD}$, $G_{GD}$ and $B_{GD}$ can be searched from the standard color data of color squares in the color data look-up table. Data $R_S$, $G_S$ and $B_S$ corresponding to data $R_{GD}$, $G_{GD}$ and $B_{GD}$ is determined according to the correspondence in the color data look-up table, and the determined data $R_S$, $G_S$ and $B_S$ is taken as the corrected image data of the pixel.

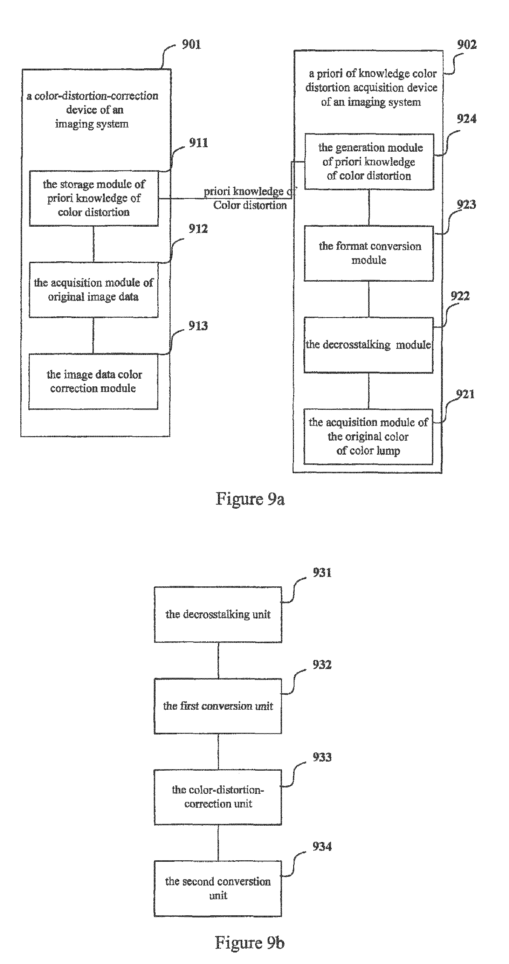

A color-distortion-correction device 901 of an imaging system and a acquisition device of priori knowledge of color distortion 902 of an imaging system are provided according to an embodiment of the present invention, as shown in figure 9a.

The color-distortion-correction device 901 of the imaging system includes a storage module of priori knowledge of color distortion, 911, an original image data acquisition module 912, and an image data color correction module 913.

The acquisition device of priori knowledge of color distortion 902 of the imaging system includes an original color data of color square acquisition module 921, a decrosstalking module 922, a format conversion module 923, and generation module of priori knowledge of color distortion 924.

Functions of respective modules in the acquisition device of priori knowledge of color distortion 902 of the imaging system are as follows.

The aquisition module of original color data of color squares 921 is used to obtain original data of color squares by the imaging system shooting all color squares of a ColorChecker. Generally, the original color data of respective color squares is in the first format.

The decrosstalking module 922 is used to decrosstalk the original color data of color squares to generate decrosstalked color data for respective color squares. The decrosstalked color data is also in the first format.

The format conversion module 923 is used to convert standard color data of color squares into data in the HSI format to generate standard color data in the second format of respective color squares, and convert decrosstalked color data of color squares into data in the HSI format to generate decrosstalked color data in the second format of respective color squares.

The generation module of priori knowledge of color distortion 924 is used to determine the correspondence between standard color data in the second format of a color square and the decrosstalked color data in the second format of the corresponding color square, and generate the priori knowledge of color distortion of the imaging system based on the correspondence, for respective color squares. The priori knowledge of color distortion includes the curve function of HLUT, the curve function of SLUT and curve function of ILUT. Alternatively, the priori knowledge of color distortion includes the curve table of HLUT, the curve table of SLUT and the curve table of ILUT. The method of generating the priori knowledge of color distortion of the imaging system, i.e., the curve function of HLUT, the curve function of SLUT and the curve function of ILUT, or the curve table of HLUT, the curve table of SLUT and the curve table of ILUT has been described in Step S105, and the details are omitted herein.

Functions of respective modules in the color-distortion-correction device 901 of the imaging system are as follows.

The storage module of priori knowledge of color distortion 911 is used to store the prior knowledge of color distortion in the imaging system generated by the generation module of priori knowledge of color distortion 924 in the acquisition device of priori knowledge of color distortion 902. The prior knowledge of color distortion includes the curve function of HLUT, the curve function of SLUT and the curve function of ILUT, or prior knowledge of color distortion include curve table of HLUT, curve table of SLUT, curve table of ILUT.

The original image data acquisition module 912 is used to shoot the scene to generate the original image data of the scene. Generally, the original image data of the captured object is in the first format.

According to the priori knowledge of color distortion stored in the storage module of priori knowledge of color distortion 911, the image data color correction module 913 corrects a color distortion of the original image data obtained by the original image data acquisition module 912 to generate the corrected image data. The priori knowledge of color distortion include the curve function of HLUT, the curve function of SLUT and the curve function of ILUT, or the curve table of HLUT, the curve table of SLUT and the curve table of ILUT. The method of correcting by the image data color correction module 913 a color distortion of the original image data obtained by the original image data acquisition module 912, according to the priori knowledge of color distortion stored in the storage module of priori knowledge of color distortion 911, is the same as the method of figure 2, thus details are omitted herein.

A structure of the image data color correction module 913 as shown in figure 9b includes a decrosstalking unit 931, a first conversion unit 932, a color-distortion-correction unit 933 and a second conversion unit 934.

Functions of respective modules in the image data color correction module 913 are as follows. The decrosstalking unit 931 decrosstalks the original image data to generate the image data decrosstalked. The first conversion unit 932 converts the image data decrosstalked into data in the HSI format to obtain the decrosstalked image data in the second format. The color-distortion-correction unit 933 corrects a color distortion of the decrosstalked image data in the second format according to the priori knowledge of color distortion. Particularly, data in the second format corresponding to the decrosstalked image data in the second format is determined according to the priori knowledge of color distortion, and the determined data in the second format is taken as corrected image data in the second format. The method of correcting by the color-distortion-correction unit 933 a color distortion of the decrosstalked image data in the second format according to the priori knowledge of color distortion has been described in step S204 thus details are omitted herein.

The second conversion unit 934 converts corrected image data in the second format into data in the first format to obtain the final corrected image data.

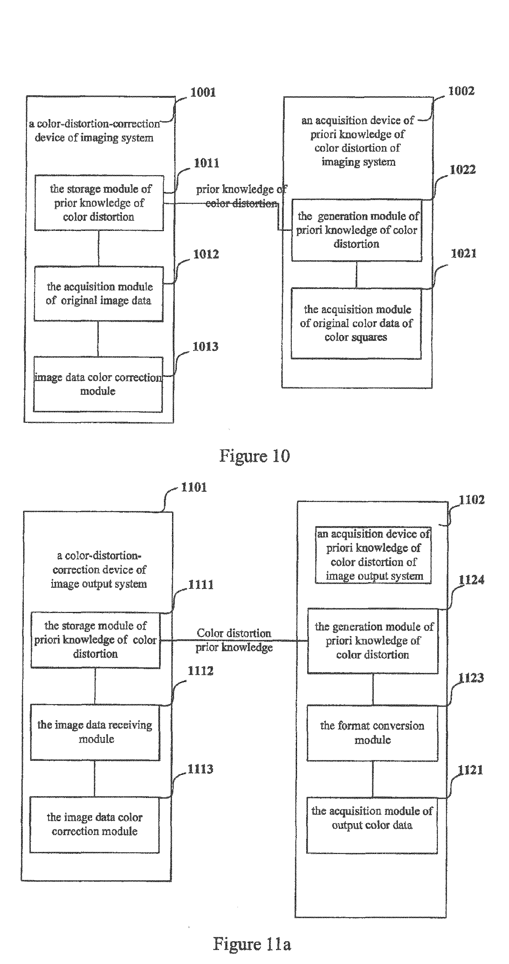

According to the embodiment of the present invention, another color-distortion-correction device 1001 in an imaging system and another priori knowledge of color distortion acquisition 1002 in the imaging system are provided, as shown in figure 10.

The color-distortion-correction device 1001 in the imaging system includes a storage module of priori knowledge of color distortion, 1011, an original image data acquisition module 1012 and image data color correction module 1013.

The acquisition device of priori knowledge of color distortion 1002 in the imaging system includes an original color data of a color square acquisition module1021, and a generation module of priori knowledge of color distortion 1022.

Functions of respective modules of the prior knowledge of color distortion acquisition device 1002 in the imaging system are as follows.

The original color data of a color square acquisition module 1021 is used to obtain the original color data of respective color squares generated after the image system captures all color squares of the ColorChecker. Generally, the original color data of various color squares obtained by shooting is color data in the first format.

The generation module of priori knowledge of color distortion 1022 is used to obtain the correction curve function or correction curve table. According to the correction curve function or correction curve table, the generation module 1022 corrects the color distortion of the decrosstalked second format color distortion of color squares to generate the corrected color data in the second format of respective color squares. Next, the generation module 1022 converts the corrected color data in the second format of color squares into color data in the first format to generate the corrected color data in the first format of respective color squares. Next, for each color square, the generation module 1022 determines the correspondence between its original color and its corrected color data in the first format, and stores the correspondence in a color data look-up table.

wherein, the correction curve function or correction curve table is as follows.

original color data of various color squares is obtained by the image system shoots all color squares of a ColorChecker, wherein the original color data of the color square is in the first format. Decrosstalking the original color data of various color squares to generate the decrosstalked color data of respective color squares. Also, the standard color data of various color squares are converted into data in the second format to generate standard color data in the second format of various color squares. Next, the decrosstalked color data of various color squares are converted into data in the second format to obtain the decrosstalked color data in the second format of various color squares. Wherein, the standard color data of the color squares are in the first format. For each color square, the correspondence between its standard color data in the second format and its decrosstalked color data in the second format. Next, according to the correspondence, curve functions including the curve function of HLUT, the curve function of SLUT and the curve function of ILUT, or the curve tables including the curve table of HLUT, the curve table of SLUT and the curve table of ILUT are determined. The standard color data of respective color squares are usually in the first format.

The method of generating by the generation module of priori knowledge of color distortion 1022 the priori knowledge of color distortion in the imaging system are the same as that shown in figure 3, and thus details are omitted herein.

Functions of respective modules of the color-distortion-correction device 1001 in imaging system are as follows. The storage module of priori knowledge of color distortion 1011 is used to store the priori knowledge of color distortion generated by the generation module of priori knowledge of color distortion 1022 is in the storage module of priori knowledge of color distortion 1002.

The original image data acquisition module 1012 shoots the scene to obtain the original image data of the scene. In general, the original image data of the captured scene is data in the first format.

Based on the priori knowledge of color distortion stored in the storage module of priori knowledge of color distortion 1011, the image data color correction module 1013 corrects a color distortion of the original image data obtained by the original image data acquisition module 1012, and thus the corrected image data is generated. The method of correcting by the image data color correction module 1013 a color distortion of the original image data obtained by the original image data acquisition module 1012 based on the priori knowledge of color distortion is the same as that shown in figure 4 and thus details are omitted herein.

According to an embodiment of the invention, a color-distortion-correction device 1101 and a acquisition device of priori knowledge of color distortion 1102 in an image output system are provided, as shown in figure 11a. The color-distortion-correction device 1101 of the image output system includes a storage module of priori knowledge of color distortion, 1111, an image data receiving module 1112, and an image data color correction module 1113. The acquisition device of priori knowledge of color distortion 1102 of the image output system includes an acquisition module of output color data 1121, a decrosstalking module 1122, a format conversion module 1123, and a generation module of priori knowledge of color distortion 1124.

Functions of respective modules of the acquisition device of priori knowledge of color distortion 1102 in the image output system are as follows. The output color data acquisition module 1121 collects the image data of images of the various color squares outputted from the output system, and determines the output color data of various color squares based on the collected image data. Generally, the output color data of various color squares are color data in the first format. The format conversion module 1123 converts data in the standard format of each color square into data in the second format to generate standard color data in the second format of each color square, and converts output color data of each color square into data in the second format to generate output color data in the second format of each color square. The generation module of priori knowledge of color distortion 1124 determines, for each color square, the correspondence between its standard color data in the second format and its output color data in the second format, and then generates the priori knowledge of color distortion of the imaging system according to the correspondence. The method of generating the priori knowledge by the generation module of priori knowledge of color distortion 1124 is the same as that of step S504 and thus details are omitted herein.

Functions of respective modules of the color-distortion-correction device 1101 in the image output system are as follows. The storage module of priori knowledge of color distortion 1111 stores the priori knowledge of color distortion generated by the generation module of priori knowledge of color distortion 1124 of the acquisition device of priori knowledge of color distortion 1102 in the image output system. The image data receiving module 1112 receives image data of images to be outputted. The format of image data received by the image data receiving module 1112 may be the first format.

The image data color correction module 1113, according to the priori knowledge of color distortion stored in the storage module of priori knowledge of color distortion 1111, corrects a color distortion of the image data received by the image data receiving module 1112. Wherein, the priori knowledge of color distortion includes the curve function of HLUT, the curve function of SLUT, and the curve function of ILUT, or the priori knowledge of color distortion includes the curve table of HLUT, the curve table of SLUT, and the curve table of ILUT. The method of correcting by the image data color correction module 1113, according to priori knowledge of color distortion, the color distortion of the received image data, is the same as the method of figure 6 and thus details are omitted herein.

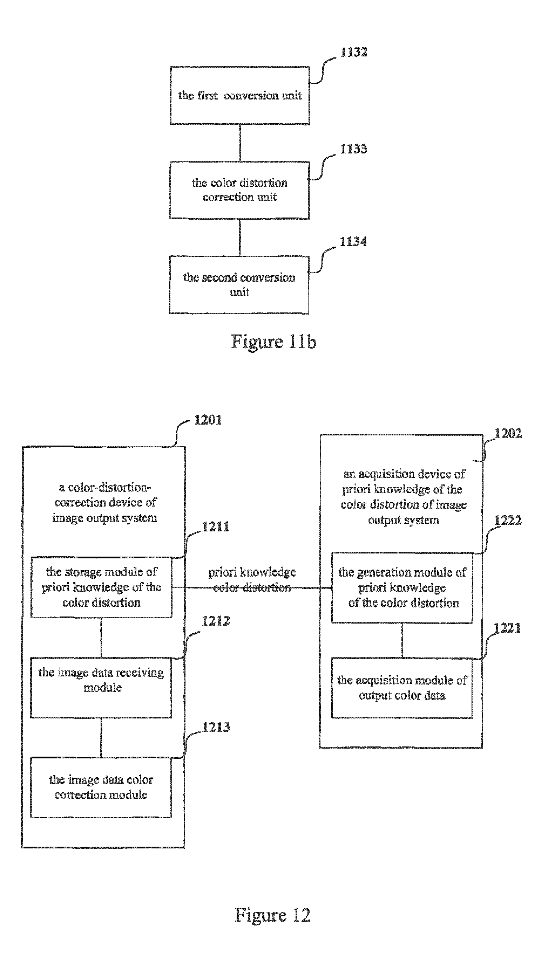

Wherein, a specific structure of the image data color correction module 1113, as shown in figure 11b, includes a first conversion unit 1132, a color-distortion-correction unit 1133 ad a second conversion unit 1134.

Functions of respective units in the image data color correction module are as follows.

The first conversion unit 1132 converts the image data received by the image output system as original image data in the first format into data in the second format to obtain uncorrected image data in the second format.

the color-distortion-correction unit 1133 corrects a color distortion of uncorrected image data in the second format according to the priori knowledge of color distortion. That is, according to the priori knowledge of color distortion, the color-distortion-correction unit 1133 determines data in the second format corresponding to uncorrected image data in the second format, and considers the corresponding data in the second format as corrected image data in the second format. According to the described prior knowledge of color distortion, The method of correcting by the color-distortion-correction unit 1133, according to the priori knowledge of color distortion, a color distortion of uncorrected image data in the second format are same as the method of figure 6 and thus details are omitted herein.

the second conversion unit 1134 converts corrected image data in the second format into data in the first format to obtain the final corrected image data.

According to an embodiment of the present invention, another color-distortion-correction device 1201 in image output system another acquisition device of priori knowledge of color distortion 1202 in an image output system are provided, as shown in figure 12. Wherein, the color-distortion-correction device 1201 in the image output system includes a storage module of priori knowledge of color distortion, 1211, an image data receiving module 1212 and an image data color correction module 1213. The acquisition device of priori knowledge of color distortion 1202 in the image output system includes an acquisition module of output color data 1221, and a generation module of priori knowledge of color distortion 1222. Functions of respective modules of the acquisition device of priori knowledge of color distortion 1202 in the image output system are as follows. The output color data acquisition module 1221 collects the image data of images of color squares output from the image output system, and determines the output color data of respective color squares based on the collected image data. Generally, the output color data of a color square is color data in the first format.

The generation module of priori knowledge of color distortion 1222 obtains the correction curve function or correction curve table, corrects a color distortion of output color data in the second format of color squares based on the correction curve function or correction curve table to generate the corrected color data in the second format of respective color squares, converts the corrected color data in the second format of color squares into color data in the first format to generate the corrected color data in the first format of respective color squares, determines, for each color square, the correspondence between its standard color data and its corrected color data in the first format, stores the correspondence in the color data look-up table, and takes the color data look-up table as the priori knowledge of color distortion of the image output system.

Wherein, the correction curve function or correction curve table is obtained as follows. The image data of images of respective color squares outputted from the image output system are collected, and the output color data of respective color squares are determined according to the collected image data. The standard color data of color squares are converted into data in the second format to generate standard color data in the second format of respective color squares. The output color data of color squares are converted into data in the second format to generate output color data in the second format of respective color squares. For each color square, the correspondence between its standard color data in the second format and its output color data in the second format is determined, and then the curve functions including the curve function of HLUT, the curve function of SLUT and the curve function of ILUT, or the curve tables including the curve table of HLUT, the curve table of SLUT and the curve table of ILUT are determined according to the correspondence. The method of generating by the generation module of priori knowledge of color distortion 1222 the priori knowledge of color distortion of the image output system is the same as the method shown in figure 7 and thus details are omitted herein.

Functions of respective modules of the color-distortion-correction device 1201 in the image output system are as follows. The storage module of priori knowledge of color distortion 1211 stores the priori knowledge of color distortion of the image output system which is generating by the generation module of priori knowledge of color distortion 1222 in the acquisition device of priori knowledge of color distortion 1202 of the image output system. The image data receiving module 1212 receives the image data of images to be output. The image data color correction module 1213, according to the priori knowledge of color distortion stored in the priori knowledge of color distortion storage module 1211, corrects a color distortion of the image data received by the image data receiving module 1212. The method of correcting by the image data color correction module 1213 the color distortion of the received image data according to the priori knowledge of color distortion is the same as that of figure 8 and thus details are omitted herein.

In embodiments of the present invention, since the priori knowledge of color distortion of the imaging system or the image output system is obtained in advance, that is, the characteristics of the color distortion in the imaging system or the image output system are known in advance, it is capable of correcting color distortion of the image data of captured images based on the priori knowledge of color distortion in the system. Therefore, the color deviation of the color images introduced due to the characteristics of the system itself is eliminated and the goal of "what you see is what you get" is realized.

Those skilled in the art can understand that all of or part of the steps for achieving the above methods of the embodiments can be achieved by instructing related hardware by a program, and this program can be stored in a computer readable storage medium, e.g., ROM/RAM, a magnetic disc, an optical disc, etc.

The above contents are only preferred implementation modes of the invention. It should be noted that those skilled in the art can also make some improvements and decorations in the case of not breaking away from the principle of the invention, and these improvements and decorations should also be deemed to be within the scope of protection of the invention.

**Claims**

1. A method of correcting color distortion in an imaging system, including:

   said imaging system shoots the scene to generate original image data of the scene;
   correcting the color distortion of said original image data based on priori knowledge of color distortion previously stored in the imaging system, to generate corrected image data.

2. The method of claim 1, **characterized in that** the priori knowledge of color distortion includes a curve function of HLUT, a curve function of SLUT, and a curve function of ILUT; or,
   the priori knowledge of color distortion includes a curve table of HLUT, a curve table of SLUT, and a curve table of ILUT; and
   the priori knowledge of color distortion is obtained by
   obtaining original color data of color squares by the imaging system shooting respective color squares in a Color-Checker, wherein said original color data of the color squares is in the first format;
   decrosstalking the original color data of color squares to generate the decrosstalked color data of respective color squares;
   converting the standard color data of color squares into the data in the second format to generate the standard color data in the second format of respective color squares, converting the decrosstalked color data of color squares into data in the second format to generate the decrosstalked color data in the second format of respective color squares, wherein, said standard color data of respective color squares are in the first format;
   for each color square, determining the correspondence between its standard color data in the second format and its decrosstalked color data in the second format, and generating the priori knowledge of color distortion based on said correspondence.

3. The method of claim 2, **characterized in that**, said step of decrosstalking the original color data of color squares to generate the decrosstalked color data of respective color squares including:

   decrosstalking the original color data of color squares according to the following equation set 1, to generate the decrosstalked color data of respective color squares:

$$R_{GD} = K_{rr}R_k + K_{gr}G_k + K_{br}B_k$$
$$G_{GD} = K_{rg}R_k + K_{gg}G_k + K_{bg}B_k$$
$$B_{GD} = K_{rb}R_k + K_{gb}G_k + K_{bb}B_k \quad (\text{equation set 1})$$

   wherein, Krr, Kgg, Kbb, Krg, Krb, Kgr, Kgb, Kbr and Kbb are crosstalking parameters, $R_{GD}$, $G_{GD}$ and $B_{GD}$ are the original color data of a color square, $R_k$, $G_k$ and $B_k$ are the decrosstalked color data in the RGB format.

4. The method of claim 2, **characterized in that**, said step of correcting the color distortion of original image data based on the priori knowledge of color distortion previously stored in the imaging system, including steps:

   decrosstalking said original image data to generate the image data decrosstalked, wherein said original image data is the image data in the first format;
   converting said image data decrosstalked into data in the second format to generate the decrosstalked image data in the second format;

correcting color distortion of the decrosstalked image data in the second format according to the priori knowledge of color distortion, including: determining image data in the second format corresponding to the decrosstalked image data in the second format based on the priori knowledge of color distortion, and taking the corresponding data in the second format as the corrected image data in the second format;

converting the corrected image data in the second format into data in the first format to generate the final corrected image data.

5. The method of claim 4, **characterized in that**, the step of decrosstalking the original color data of color squares to generate the decrosstalked color data of respective color squares including:

decrosstalking the original color data of color squares according to the following equation set 1, to generate the decrosstalked color data of respective color squares:

$$R_{GD} = K_{rr}R_k + K_{rg}G_k + K_{rb}B_k$$
$$G_{GD} = K_{rg}R_k + K_{gg}G_k + K_{gb}B_k$$
$$B_{GD} = K_{rb}R_k + K_{gb}G_k + K_{bb}B_k \quad （equation\ set\ 1）$$

wherein, $K_{rr}$, $K_{gg}$, $K_{bb}$, $K_{rg}$, $K_{rb}$, $K_{gr}$, $K_{gb}$, $K_{br}$, $K_{bb}$ are crosstalking parameters; $R_{GD}$, $G_{GD}$, $B_{GD}$ are the original image data, $R_k$, $G_k$ and $B_k$ are the image data decrosstalked.

6. The method of claim 1, **characterized in that**, the priori knowledge of color distortion is a color data look-up table, and the priori knowledge of color distortion is obtained by:

acquiring the correction curve function or the correction curve table;

correcting color distortion of the decrosstalked color data in the second format of color squares of the Color-Checker based on the correction curve function or the correction curve table, to generate corrected color data in the second format of respective color squares;

converting the corrected color data in the second format of color squares into color data in the first format to generate the corrected color data in the first format of respective color squares;

for each color square, determining the correspondence between its original color data and its corrected color data in the first format, and storing the determined correspondence in the color data look-up table;

wherein, the correction curve function or correction curve table is obtained by:

obtaining the original color data of color squares by the imaging system shooting respective color squares in a ColorChecker, wherein said original color data of the color squares is in the first format;

decrosstalking the original color data of color squares to generate decrosstalked color data of respective color squares;

converting the standard color data of color squares into data in the second format to generate standard color data in the second format of respective color squares, and converting the decrosstalked color data of color squares into data in the second format to generate the decrosstalked color data in the second format of respective color squares, wherein the standard color data of respective color squares are in the first format;

for each color square, determining the correspondence between its standard color data in the second format and its decrosstalked color data in the second format, and determining, based on the correspondence, the curve functions including a curve function of HLUT, a curve function of SLUT and a curve function of ILUT, or the curve tables including a curve table of HLUT, a curve table of SLUT and a curve table of ILUT.

7. The method of claim 6, **characterized in that**, the step of correcting the color distortion of said original image data based on the priori knowledge of color distortion previously stored in the imaging system, including:

searching the data corresponding to the original image data based on the color data look-up table, and taking the searched corresponding data as the corrected image data.

8. The method of claim 2, wherein the first format is the device color space format including but not limited to RGB, CMY color space format, the second format is the color appearance color space format including but not limited to HSI, HSB, HSV, HSL, LCH, and HGICl color space format, the curve function of HLUT is the hue curve function of the color appearance color space, the curve function of SLUT is the saturation curve function of the color appearance color space, and the curve function of ILUT is the intensity curve function of the color appearance color space.

9.  A method of correcting color distortion in an image output system, including steps:

    the image output system receives image data of images to be output;
    correcting color distortion of the received image data based on priori knowledge of color distortion previously stored in the image output system, to generate the corrected image data, and outputting the corrected image data from the image output system.

10. The method of claim 9, **characterized in that**, the priori knowledge of color distortion includes a curve function of HLUT, a curve function of SLUT and a curve function of ILUT, or the priori knowledge of color distortion includes a curve table of HLUT, a curve table of SLUT and a curve table of ILUT; and
    the priori knowledge of color distortion is acquired by steps:

    collecting image data of color squares of a ColorChecker outputted from the image output system, and determining the output color data of color squares based on the collected image data, wherein the output color data of respective color squares are in the first format;
    converting the standard color data of color squares into data in the second format to generate standard color data in the second format of respective color squares, and converting the output color data of color squares into data in the second format to generate output color data in the second format of respective color squares;
    for each color square, determining the correspondence between its standard color data in the second format and its output color data in the second format, and generating the priori knowledge of color distortion based on the correspondence.

11. The method of claim 10, **characterized in that**, the step of correcting color distortion of the received image data based on priori knowledge of color distortion previously stored in the image output system, including:

    converting the image data received by the image output system into data in the second format to generate uncorrected image data in the second format;
    correcting color distortion of uncorrected image data in the second format based on the priori knowledge of color distortion, to generate corrected image data in the second format;
    converting corrected image data in the second format into data in the first format to generate the final corrected image data.

12. The method of claim 9, **characterized in that**, the priori knowledge of color distortion is a color data look-up table, and the priori knowledge of color distortion is obtained by steps:

    obtaining the correction curve function or the correction curve table;
    correcting color distortion of output color data in the second format of color squares in a ColorChecker based on the correction curve function or the correction curve table, to generate the corrected color data in the second format of respective color squares;
    converting the corrected color data in the second format of color squares into color data in the first format to generate the corrected color data in the first format of respective color squares;
    for each color square, determining the correspondence between its standard color data and its corrected color data in the first format, and storing the determined correspondence in a color data look-up table;
    wherein, the correction curve function or correction curve table is obtained by steps:

        collecting the image data of images of color squares outputted from the output system, and determining the output color data of respective color squares according to the collected image data, wherein the output color data of respective color squares are in the first format;
        converting the standard color data of color squares into data in the second format to generate standard color data in the second format of respective color squares, and converting the output color data of color squares into data in the second format to generate output color data in the second format of respective color squares, wherein the standard color data of color squares are in the first format;
        for each color square, determining the correspondence between its standard color data in the second format and its output color data in the second format, and determining, based on the correspondence, the curve functions including a curve function of HLUT, a curve function of SLUT and a curve function of ILUT, or the curve tables including a curve table of HLUT, a curve table of SLUT and a curve table of ILUT.

13. The method of claim 12, **characterized in that**, the step of correcting color distortion of the received image data based on priori knowledge of color distortion previously stored in the image output system including:

taking the image data received by the image output system as the original image data, determining data corresponding to the original image data base on the color data look-up table, and taking the determined corresponding data as the corrected image data.

14. A color-distortion-correction device in an imaging system, including:

a storage module of priori knowledge of color distortion, for storing the priori knowledge of color distortion of the imaging system;
an original image data acquisition module for shooting the scene to generate original image data in the first format of the scene;
an image data color correction module for, based on the priori knowledge of color distortion stored in the storage module of priori knowledge of color distortion, correcting color distortion of the original image data acquired by the original image data acquisition module to generate the corrected image data, wherein the priori knowledge of color distortion includes a curve function of HLUT, a curve function of SLUT and a curve function of ILUT, or the priori knowledge of color distortion includes a curve table of HLUT, a curve table of SLUT and a curve table of ILUT, or the priori knowledge of color distortion includes a color data look-up table of color data in the first format of respective color squares.

15. The device of claim 14, **characterized in that** the image data color correction module including:

a decrosstalking unit for decrosstalking the original image data to generate the image data decrosstalked;
a first conversion unit for converting the image data decrosstalked into data in the second format to generate the decrosstalked image data in the second format;
a color-distortion-correction unit for correcting color distortion of the decrosstalked image data in the second format according to the priori knowledge of color distortion, including: determining data in the second format corresponding to the decrosstalked image data in the second format according to the priori knowledge of color distortion, and taking the corresponding data in the second format as corrected image data in the second format;
a second conversion unit for converting corrected image data in the second format into data in the first format to generate the final corrected image data.

16. An acquisition device of priori knowledge of color distortion of an imaging system, including:

an acquisition module of original color data of color squares, for acquiring original color data in the first format of color squares by the imaging system shooting respective color squares in a ColorChecker;
a decrosstalking module for decrosstalking the original color data of color squares to generate the decrosstalked color data of respective color squares;
a format conversion module for converting the standard color data of color squares into data in the second format to generate standard color data in the second format of respective color squares, and converting the decrosstalked color data of color squares into data in the second format to generate the decrosstalked color data in the second format of respective color squares;
a generation module of priori knowledge of color distortion for determining, for each color square, the correspondence between its standard color data in the second format and its decrosstalked color data in the second format, and generating the priori knowledge of color distortion of the imaging system according to the correspondence.

17. A color-distortion-correction device of an imaging system, including:

a storage module of priori knowledge of color distortion, for storing the priori knowledge of color distortion of the imaging system;
an original image data acquisition module for shooting the scene to generate original image data in the first format of the scene;
an image data color correction module for correcting, according to priori knowledge of color distortion stored in the storage module of priori knowledge of color distortion, a color distortion of the original image data generated by the original image data acquisition module to generate the corrected image data, wherein the priori knowledge of color distortion is a color data look-up table in which the correspondence between the standard color data of a color square and the output color data of said color square is stored.

18. An acquisition device of priori knowledge of color distortion of in an imaging system, including:

an original color data of a color square acquisition module for acquiring original color data in the first format of color squares by the imaging system shooting respective color squares in a ColorChecker;

a generation module of priori knowledge of color distortion for obtaining a correction curve function or a correction curve table, correcting color distortion of the decrosstalked color data in the second format of respective color squares based on the correction curve function or correction curve table, to generate the corrected color data in the second format of respective color squares, converting the corrected color data in the second format of color squares into color data in the first format to generate the corrected color data in the first format of respective color squares, determining, for each color square, the correspondence between its original color data and its corrected color data in the first format and storing the determined correspondence in a color data look-up table; wherein, the correction curve function or the correction curve table is determined by steps:

obtaining original color data of color squares by the imaging system shooting respective color squares in a ColorChecker, wherein the original color data of color squares are in the first format;

decrosstalking the original color data of color squares to generate decrosstalked color data of respective color squares;

converting the standard color data of color squares into data in the second format to generate standard color data in the second format of respective color squares, and converting the decrosstalked color data of color squares into data in the second format to generate the decrosstalked color data in the second format of respective color square, wherein the standard color data of color squares are in the first format;

for each color square, determining the correspondence between its standard color data in the second format and its decrosstalked color data in the second format, and determining, based on the correspondence, the curve functions including a curve function of HLUT, a curve function of SLUT and a curve function of ILUT, or the curve tables including a curve table of HLUT, a curve table of SLUT and a curve table of ILUT.

19. A color-distortion-correction device of an image output system, including:

a storage module of priori knowledge of color distortion, for storing the priori knowledge of color distortion of the image output system;

an image data receiving module for receiving image data of images to be output;

an image data color correction module for, based on the priori knowledge of color distortion stored in the storage module of priori knowledge of color distortion, correcting color distortion of the image data received by the image data receiving module, wherein the priori knowledge of color distortion includes a curve function of HLUT, a curve function of SLUT and a curve function of ILUT, or the priori knowledge of color distortion includes a curve table of HLUT, a curve table of SLUT and a curve table of ILUT, or the priori knowledge of color distortion includes a color data look-up table of color data in the first format of respective color squares.

20. The device of claim 19, **characterized in that** the image data color correction module including:

a first conversion unit for converting the image data received by the image output system as original data in the first format into data in the second format to generate uncorrected image data in the second format;

a color-distortion-correction unit for correcting color distortion of uncorrected image data in the second format according to the priori knowledge of color distortion, said correcting color distortion including: according to the priori knowledge of color distortion, determining data in the second format corresponding to uncorrected image data in the second format, and taking the corresponding data in the second format as corrected image data in the second format,

a second conversion unit for converting corrected image data in the second format into data in the first format to generate the final corrected image data.

21. An acquisition device of priori knowledge of color distortion of an image output system, including:

an acquisition module of output color data for collecting the image data of images of color squares outputted from the output system, and determining the output color data of respective color squares according to the collected image data;

a format conversion module for converting the standard color data of color squares into data in the second format to generate standard color data in the second format of respective color squares, and converting the output color data of color squares into data in the second format to generate output color data in the second format of respective color squares, wherein the standard color data of respective color squares are in the first format;

a generation module of priori knowledge of color distortion determining, for each color square, the correspondence between its standard color data in the second format and its output color data in the second format, and generating the priori knowledge of color distortion based on the correspondence of the image output system.

22. A color-distortion-correction device of an image output system, including:

a storage module of priori knowledge of color distortion, for storing the priori knowledge of color distortion of the image output system, wherein the priori knowledge of color distortion is a color data look-up table in which the correspondence between the standard color data of a color square and the corrected color data in the first format of this color square is stored;

an image data receiving module for receiving the image data of images to be output;

an image data color correction module for correcting color distortion of the image data received by the image data receiving module according to the priori knowledge of color distortion stored in the storage module of priori knowledge of color distortion.

23. An acquisition device of priori knowledge of color distortion of an image output system, including:

an acquisition module of output color data for collecting image data of images of color squares output by the image output system, determining the output color data of respective color squares based on the collected image data;

a generation module of priori knowledge of color distortion, for obtaining a correction curve function or a correction curve table, correcting, based on the correction curve function or correction curve table, a color distortion of output color data in the second format of color squares, to generate the corrected color data in the second format of respective color squares, converting the corrected color data in the second format of color squares into color data in the first format to generate the corrected color data in the first format of respective color squares, determining, for each color square, the correspondence between its standard color data and its corrected color data in the first format and storing the determined correspondence in a color data look-up table;

wherein, the correction curve function or the correction curve table is determined by steps:

collecting image data of images of color squares output by the image output system, and determining the output color data of respective color squares based on the collected image data;

converting the standard color data of color squares into data in the second format to generate standard color data in the second format of respective color squares, and converting the output color data of color squares into data in the second format to generate output color data in the second format of respective color squares;

for each color square, determining the correspondence between its standard color data in the second format and its output color data in the second format, and determining, based on the correspondence, the curve functions including a curve function of HLUT, a curve function of SLUT and a curve function of ILUT, or the curve tables including a curve table of HLUT, a curve table of SLUT and a curve table of ILUT.

| an imaging system shoots respective color squares of a ColorChecker under the E50 light illumination condition of uniform pure white | S101 |

↓

| obtaining the original color data of color squares by the imaging system shooting respective color squares of a ColorChecker | S102 |

↓

| obtaining decrosstalked color data of respective color squares by decrosstalking the original color data of color squares | S103 |

↓

| converting standard color data of color squares into data in the HSI format, and converting the decrosstalked color data of color squares into Data in the HSI format | S104 |

↓

| for each color square, determining correspondence between its standard color data in the second format and its decrosstalked color data in the second format, and obtaining the priori knowledge of color distortion of the imaging system based on the correspondence | S105 |

Figure 1a

Figure 1b

| | |
|---|---|
| the imaging system shoots the scene to obtain original image data of the scene | S201 |
| decrosstalking the original image data to generate the image data decrosstalked | S202 |
| converting the image data decrosstalked into data in the second format to generate the decrosstalked image data in the second format | S203 |
| correcting color distortion of decrosstalked image data in the second format according to the priori knowledge of color distortion of the imaging system to generate corrected image data in the second format | S204 |
| converting corrected image data in the second format into image data in the first format to generate image data in the first format as the final corrected image data | S205 |

Figure 2

```
┌─────────────────────────────────────────────────┐    S301
│  obtaining correction curve functions or correction curve │ ⌐
│                      tables                       │
└─────────────────────────────────────────────────┘
                        │
                        ▼
┌─────────────────────────────────────────────────┐    S302
│  correcting color distortion of the decrosstalked color data in │ ⌐
│  the second format of color squares to generate the corrected │
│  color data in the second format of respective color squares │
└─────────────────────────────────────────────────┘
                        │
                        ▼
┌─────────────────────────────────────────────────┐    S303
│  converting the corrected color data in the second format of │ ⌐
│  color squares into color data in the first format to obtain the │
│  corrected color data in the first format of respective color │
│                     squares                       │
└─────────────────────────────────────────────────┘
                        │
                        ▼
┌─────────────────────────────────────────────────┐    S304
│  for each color square, determining correspondence between │ ⌐
│  its original color data and its corrected color data in the first │
│  format, and saving the correspondence in a color data look- │
│                     up table                      │
└─────────────────────────────────────────────────┘
```

## Figure 3

```
┌─────────────────────────────────────────────────┐    S401
│  the imaging system shoots the scene to generate the original │ ⌐
│                image data of the scene            │
└─────────────────────────────────────────────────┘
                        │
                        ▼
┌─────────────────────────────────────────────────┐    S402
│  according to the color data look-up table, determining data │ ⌐
│  corresponding to the original image data, and the determined │
│  corresponding data is taken as the corrected image data, so as │
│  to finish the color-distortion-correction on the original image │
└─────────────────────────────────────────────────┘
```

## Figure 4

| the image output system outputs images of respective color squares as the output images for respective color squares, according to standard color data of respective color squares of a ColorChecker | S501 |

| collecting image data of color squares from the image output system, and determining output color data of respective color squares | S502 |

| converting standard color data of color squares into data in the second format, and converting output color data of color squares into data in the second format | S503 |

| for each color square, determining the correspondence between its standard color data in the second format and its output color data in the second format, and thus obtaining the priori knowledge of color distortion of the image output system based on the correspondence | S504 |

Figure 5

```
┌─────────────────────────────────────────────────────┐  S601
│ the image output system receives the image data of   │
│                images to be output                    │
└─────────────────────────────────────────────────────┘
                          │
                          ▼
┌─────────────────────────────────────────────────────┐  S602
│ converting the original image data into data in the  │
│  second format to generate uncorrected color data in │
│                 the second format                     │
└─────────────────────────────────────────────────────┘
                          │
                          ▼
┌─────────────────────────────────────────────────────┐  S603
│ correcting color distortion of uncorrected image data│
│ in the second format to generate corrected image data│
│ in the second format according to priori knowledge of│
│     color distortion of the image output system      │
└─────────────────────────────────────────────────────┘
                          │
                          ▼
┌─────────────────────────────────────────────────────┐  S604
│ converting corrected image data in the second format │
│ into data in the first format to generate corrected  │
│ image data in the first format as the final corrected│
│                     image data                        │
└─────────────────────────────────────────────────────┘
                          │
                          ▼
┌─────────────────────────────────────────────────────┐  S605
│ outputting images based on corrected image data in   │
│                 the first format                      │
└─────────────────────────────────────────────────────┘
```

Figure 6

obtaining a correction curve function or a correction curve
table — S701

correcting color distortion of output color data in the second
format of color squares to generate the corrected color data in
the second format of respective color squares, according to
the correction curve function or correction curve table — S702

converting the corrected color data in the second format into
color data in the first format to generate corrected color in the
first format of respective color squares — S703

for each color square, determining correspondence between
the standard color data of one color square and the corrected
color data in the first format of said color square, and storing
the correspondence in a color data look-up table — S704

Figure 7

The image output system receives the image data of images to be
output — S801

obtaining image data corresponding to the original image data based
on the color data lookup table, and taking the obtained
corresponding data as the corrected image data, so as to finish the
color-distortion-correction for the original image — S802

Figure 8

901

a color-distortion-correction
device of an
imaging system

911

the storage module of
priori knowledge of
color distortion

priori knowledge of
Color distortion

912

the acquisition module of
original image data

913

the image data color
correction module

902

a priori of knowledge color
distortion acquisition device
of an imaging system

924

the generation module
of priori knowledge
of color distortion

923

the format conversion
module

922

the decrosstalking module

921

the acquisition module of
the original color
of color lump

Figure 9a

931

the decrosstalking unit

932

the first conversion unit

933

the color-distortion-
correction unit

934

the second converstion
unit

Figure 9b

1001

a color-distortion-correction device of imaging system

1011

the storage module of prior knowledge of color distortion

prior knowledge of color distortion

1012

the acquisition module of original image data

1013

image data color correction module

1002

an acquisition device of priori knowledge of color distortion of imaging system

1022

the generation module of priori knowledge of color distortion

1021

the acquisition module of original color data of color squares

Figure 10

1101

a color-distortion-correction device of image output system

1111

the storage module of priori knowledge of color distortion

Color distortion prior knowledge

1112

the image data receiving module

1113

the image data color correction module

1102

an acquisition device of priori knowledge of color distortion of image output system

1124

the generation module of priori knowledge of color distortion

1123

the format conversion module

1121

the acquisition module of output color data

Figure 11a

1132

the first conversion unit

1133

the color distortion
correction unit

1134

the second conversion
unit

Figure 11b

1201

a color-distortion-
correction device of
image output system

1211

the storage module of
priori knowledge of the
color distortion

1212

the image data receiving
module

1213

the image data color
correction module

priori knowledge
color distortion

1202

an acquisition device of
priori knowledge of the
color distortion of image
output system

1222

the generation module of
priori knowledge
of the color distortion

1221

the acquisition module of
output color data

Figure 12

# INTERNATIONAL SEARCH REPORT

| | International application No. |
|---|---|
| | **PCT/CN2012/076097** |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G06F, H04N, G06K, G03B, G09G

Documentation searched other than minimum documentation to the extent that such documents are included in the fields searched

Electronic data base consulted during the international search (name of data base and, where practicable, search terms used)

Data bases: CNTXT, CPRSABS, DWPI, CNKI

Key terms: colour, color, correction, mapping, cross talk, look up table, LUT, space

**C. DOCUMENTS CONSIDERED TO BE RELEVANT**

| Category* | Citation of document, with indication, where appropriate, of the relevant passages | Relevant to claim No. |
|---|---|---|
| X | XU, Wei et al., Research of Color Correction Algorithm in Image-based Virtual Space, | 1, 9-11, 14, 17, 19-22 |
| Y | , JOURNAL OF CHINESE COMPUTER SYSTEMS, February 2001, vol. 22, no. 2, pages | 2-5, 8, 15-16 |
| A | 165-167, section 1, introduction to section 4, color correction | 6-7, 12-13, 18, 23 |
| X | US 7561194 B1 (EASTMAN KODAK COMPANY), 14 July 2009 (14.07.2009), | 1, 9, 14, 17, 19, 22 |
| Y | description, column 2, lines 42-58, and column 3, line 45 to column 5, line 20, and figure 3 | 2-5, 8, 15-16 |
| A | | 6-7, 10-13, 18, 20-21, 23 |
| X | CN 1225778 A (SONY CORP.), 11 August 1999 (11.08.1999), description, page 2, lines | 1, 9, 14, 17, 19, 22 |
| A | 7-12 | 2-8, 10-13, 15-16, 18, 20-21, 23 |

☒ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 August 2012 (02.08.2012) | **13 September 2012 (13.09.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **TIAN, Lina** Telephone No.: (86-10) **62412072** |

Form PCT/ISA/210 (second sheet) (July 2009)

## INTERNATIONAL SEARCH REPORT

| International application No. |
|---|
| **PCT/CN2012/076097** |

**C (Continuation).**     **DOCUMENTS CONSIDERED TO BE RELEVANT**

| Category | Citation of document, with indication, where appropriate, of the relevant passages | Relevant to claim No. |
|---|---|---|
| X | CN 1568018 A (BENQ CORP.), 19 January 2005 (19.01.2005), description, page 2, line 2 to page 3, line 2, and page 4, line 7 to page 6, line 4, and figure 1 | 1, 9-11, 14, 17, 19-22 |
| Y | | 2-5, 8, 15-16 |
| A | | 6-7, 12-13, 18, 23 |
| X | CN 1437097 A (WAYTECH DEVELOPMENT, INC.), 20 August 2003 (20.08.2003), description, page 5, line 7 to page 7, line 5, and figure 5 | 1, 9, 14, 17, 19, 22 |
| A | | 2-8, 10-13, 15-16, 18, 20-21, 23 |
| X | CN 101968726 A (YUNNAN NORMAL UNIVERSITY), 09 February 2011 (09.02.2011), description, page 3, paragraph [0035] to page 7, paragraph [0079], and figure 3 | 1, 9, 14, 17, 19, 22 |
| A | | 2-8, 10-13, 15-16, 18, 20-21, 23 |

Form PCT/ISA/210 (continuation of second sheet) (July 2009)

## INTERNATIONAL SEARCH REPORT
### Information on patent family members

| International application No. |
|---|
| **PCT/CN2012/076097** |

| Patent Documents referred in the Report | Publication Date | Patent Family | Publication Date |
|---|---|---|---|
| US 7561194 B1 | 14.07.2009 | None | |
| CN 1225778 A | 11.08.1999 | WO 9842142 A1 | 24.09.1998 |
| | | EP 0920223 A1 | 02.06.1999 |
| | | JP 10540356 T2 | 03.08.1999 |
| | | KR 20000010958 A | 25.02.2000 |
| | | US 6504551 B1 | 07.01.2003 |
| | | JP 2006313574 A | 16.11.2006 |
| | | JP 2006314145 A | 16.11.2006 |
| | | CN 1265652 C | 19.07.2006 |
| | | KR 100545116 B1 | 12.07.2006 |
| | | JP 4211819 B2 | 21.01.2009 |
| | | JP 4215081 B2 | 28.01.2009 |
| CN 1568018 A | 19.01.2005 | None | |
| CN 1437097 A | 20.08.2003 | None | |
| CN 101968726 A | 09.02.2011 | None | |

Form PCT/ISA/210 (patent family annex) (July 2009)

# INTERNATIONAL SEARCH REPORT

| International application No. |
| --- |
| **PCT/CN2012/076097** |

**CONTINUATION: A. CLASSIFICATION OF SUBJECT MATTER**

G06F 3/14 (2006.01) i

H04N 1/60 (2006.01) i

H04N 9/64 (2006.01) i

Form PCT/ISA/210 (extra sheet) (July 2009)